# EUROPÄISCHE PATENTSCHRIFT

(11) **EP 4 097 046 B1**
(45) Veröffentlichungstag und Bekanntmachung des Hinweises auf die Patenterteilung: **20.05.2026**
(21) Anmeldenummer: 20829673.1
(22) Anmeldetag: 18.12.2020
(51) Int. Cl.: C01B 25/01, C02F 11/06, C21B 3/04, F23G 7/00, C02F 1/70, C02F 101/10

(54) **VERFAHREN ZUM ABTRENNEN VON PHOSPHOR UND/ODER PHOSPHORVERBINDUNGEN AUS EISEN(OXID)HALTIGEN PHOSPHOR- UND/ODER PHOSPHATTRÄGERN**
METHOD FOR SEPARATING PHOSPHORUS AND/OR PHOSPHORUS COMPOUNDS FROM PHOSPHORUS CARRIERS AND/OR PHOSPHATE CARRIERS CONTAINING IRON (OXIDE)
PROCÉDÉ DE SÉPARATION DE PHOSPHORE ET/OU DE COMPOSÉS À BASE DE PHOSPHORE À PARTIR DE SUPPORTS DE PHOSPHORE ET/OU DE SUPPORTS DE PHOSPHATE CONTENANT DU FER (OXYDE)

(30) Priorität: 02.02.2020 AT 600302020; 18.06.2020 AT 1432020
(43) Veröffentlichungstag der Anmeldung: 07.12.2022
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2020/062183
(87) Internationale Veröffentlichungsnummer: WO 2021/152386

(56) Entgegenhaltungen:
- EP-A1- 2 428 493
- WO-A1-2018/122599
- DATABASE WPI Week 200158, Derwent World Patents Index; AN 2001-525771, XP002802329
- DATABASE WPI Week 201024, Derwent World Patents Index; AN 2010-C74310, XP002802330

## Beschreibung

Die Erfindung betrifft ein Verfahren zum Abtrennen von Phosphor und/oder Phosphorverbindungen aus eisen(oxid)haltigen Phosphor- und/oder Phosphatträgern sowie Vorrichtungen zur Durchführung eines solchen Verfahrens.

Die Publikationen JP 2001-198546 A, CN 101659406 A, EP 2 428 493 A1 und WO 2018/122599 A1 betreffen den Gegenstand der vorliegenden Erfindung.

Elementare Eisen-Phosphor-Träger (Eisenphosphide bzw. Ferrophosphide) fallen z.B. im Wähler-Prozess bei der Verarbeitung von Apatit an oder auch bei der Reduktion von phosphatreichen Schmelzen im kohlenstoffhaltigen Eisenbad (wie beispielsweise beschrieben in WO 2005/113840 A1) an. Ferrophosphide fallen ebenso beim Aufarbeiten von organischen Abfallstoffen unter Zusatz von Chlorträgern und anschließender unterstöchiometrischer Verbrennung zur Oxidation der Abfallstoffe zur Bildung von Metallchloriden und Reduktion der verbleibenden Fraktion zur Gewinnung von elementarem Phosphor an, wie dies in EP 2 640 531 B1 beschrieben ist. Eisen(oxid)haltige Phosphatträger fallen weiters in der Industrie und insbesondere in kommunalen Abwasserbetrieben in großen Mengen an und stellen insgesamt hinsichtlich ihrer Entsorgung zunehmend ein Problem dar.

Das erfindungsgemäße Verfahren zum Abtrennen von Phosphor und/oder Phosphorverbindungen aus solchen eisen(oxid)haltigen Phosphor- und/oder Phosphatträgern dient insbesondere zum Aufarbeiten von Klärschlamm und Klärschlammasche, Tiermehl und Tiermehlasche, Gülle, Lebensmittelresten, flammhemmenden Kunststoffen, Medikamenten, metallurgischen Schlacken, Schmierstoffresten, gebrauchten Lithium Ionen Batterien und Elektroschrott durch Abtrennen des Phosphors und/oder seiner Verbindungen aus den genannten Phosphatträgern, wodurch der Phosphoranteil zur Weiterverarbeitung in der chemischen Industrie, beispielsweise zur Herstellung von Düngemitteln oder Phosphorsäure, und der Eisenanteil beispielsweise für die Zementindustrie oder für die Eisengewinnung nutzbar gemacht werden kann.

Insbesondere Zementwerke werden zunehmend vom Gesetzgeber in die Pflicht genommen, Klärschlamm und Klärschlammasche zu verwerten, sodass ein Bedarf besteht, Abfallstoffe wie Klärschlamm und ähnliches einer effizienten und sicheren Aufarbeitung zuzuführen.

Zur Lösung dieser Aufgabe umfasst das erfindungsgemäße Verfahren zumindest die folgenden Schritte:
a) schmelzmetallurgische Reduktion der eisen(oxid)haltigen Phosphor- und/oder Phosphatträger und unter Bildung von Schlackenschmelze und einer Schmelze von Eisenphosphiden, insbesondere FeP, Fe₂P und/oder Fe₃P und
b1) Oxidation der Schmelze von Eisenphosphiden in Gegenwart von Ca- und Al-Trägern zur Bildung von gasförmigem P₂O₅ und Kalk-Aluminium-Eisenverbindungen, insbesondere Brownmillerit, und/oder
b2) schmelzmetallurgische Umsetzung der Schmelze von Eisenphosphiden in Gegenwart von elementarem Schwefel und/oder Schwefelträgern zur Bildung von Eisensulfiden und elementarem Phosphor.

Die schmelzmetallurgischen Prozesse der Reduktion gemäß Schritt a) werden bevorzugt in bzw. auf einer induktiv beheizten Retorte aus Kohlenstoffträgern, d.h. einer Säule aus Kohlenstoffträgern wie Koks, Holzkohle oder stückigem Graphit durchgeführt.

Wann immer in der vorliegenden Anmeldung von Phosphor, Phosphat, Phosphatschlacke, Phosphatträgern und dergleichen die Rede ist, ist im Zweifel allgemein Phosphor in unterschiedlichen Modifikationen und Oxidationsstufen gemeint.

Bei der schmelzmetallurgischen Reduktion gemäß Schritt a) wird der Phosphoranteil (Phosphor und/oder Phosphat) zu Eisenphosphiden (Ferrophosphor) reduziert und der Eisenrest zu zementgängiger Schlackenschmelze umgesetzt. Die Schlackenschmelze wird von den Eisenphosphiden abgetrennt und die Eisenphosphide werden für die möglichst vollständige Abtrennung des Phosphoranteils vom Eisenanteil einerseits in der nachfolgenden schmelzmetallurgischen Oxidation der Schmelze von Eisenphosphiden mit Ca- und Al-Trägern in Kontakt gebracht, wodurch aufgrund der Oxidation flüchtiges P₂O₅ (gasförmig) gebildet wird und aus den Ca- und Al-Trägern zusammen mit dem Eisenanteil, Kalk-Aluminium-Eisenverbindungen und insbesondere Brownmillerit gebildet werden. Diese Kalk-Aluminium-Eisenverbindungen weisen keinerlei chemische Affinität zu Phosphor auf, sodass eine vollständige Trennung erfolgt. Ca- und Al-Träger müssen zugegeben werden, wenn Ca (Calcium) und Al (Aluminium) nicht ohnehin bereits im Prozess zugegen sind. So besteht beispielsweise die in Schritt a) gebildete Schlackenschmelze in der Regel zu einem großen Teil aus Kalziumsilikaten und kann daher als Ca-Träger im Schritt a) verwendet werden. Bei der zusätzlich oder alternativ vorgesehenen Umsetzung der Schmelze von Eisenphosphiden mit elementarem Schwefel und/oder Schwefelträgern werden Eisensulfide und elementarer Phosphor gebildet, wobei der elementare Phosphor wiederum keinerlei Affinität zu den unlöslichen Eisensulfiden zeigt. Bei einer zusätzlich oder alternativ vorgesehenen, nicht erfindungsgemäßen Oxidation der Schmelze von Eisenphosphiden in Gegenwart von Sauerstoff werden Eisenoxide und P₂O₅ gebildet, wobei P₂O₅ bei einer Temperatur von mindestens 1100°C wiederum keinerlei Affinität zu den Eisenoxiden zeigt. Wenn für diese Reaktion Sauerstoff nur unterstöchiometrisch zugegen ist, wird zusätzlich P₂ gebildet. Bei allen Mechanismen unter Schritt b1) bzw. b2) des erfindungsgemäßen Verfahrens werden somit chemische Eisenspezies gebildet, die keine Affinität zu den jeweiligen Phosphoranteilen aufweisen.

Mit dem erfindungsgemäßen Verfahren gelingt es, durch die oxidative Umsetzung der Schmelze von Eisenphosphiden mit Kalzium- und Aluminiumträgern gemäß Schritt b1) ein zementgängiges Produkt zu bilden, welches keinerlei Phosphoranteile aufweist, und andererseits gasförmiges P₂O₅ zu bilden, welches in der Folge zu weiteren Phosphormodifikationen umgesetzt werden kann. Aus den eingangs genannten Abfallstoffen werden mit dem erfindungsgemäßen Verfahren daher Wertstoffe sowohl für die Zementindustrie als auch für die chemische Industrie gewonnen, sodass unter den zukünftigen gesetzlichen Vorschriften zur Abnahme von Klärschlamm durch Zementwerke ein synergistisches und wirtschaftlich profitables Aufarbeitungsverfahren zur Verfügung gestellt wird. Alternativ oder zusätzlich kann durch die schmelzmetallurgische Umsetzung der Schmelze von Eisenphosphiden in Gegenwart von elementarem Schwefel und/oder Schwefelträgern, die als oxidativer Anionenaustausch mit Schwefel als Oxidationsmittel in dem Sinne verstanden werden kann, dass das Eisen der Eisenphosphide den Phosphor zugunsten des Schwefels abgibt, zwar hochreaktiver aber wirtschaftlich wertvoller elementarer Phosphor direkt gewonnen werden, während Eisensulfide regeneriert werden und für die Umsetzung der Schmelze der Eisenphosphide zur Verfügung stehen. Die Redoxreaktion mit Schwefel kann hierbei beispielsweise wie folgt angegeben werden:

| | |
|---|---|
| 2e⁻ + S⁰ → S²⁻ | (Reduktion des Schwefels) |
| P³- → P⁰ + 3e⁻ | (Oxidation des Phosphors) bzw. |
| P⁵⁻ → P⁰ + 5e⁻ | |

Alternativ können die Eisensulfide mit Sauerstoff zu Eisenoxid für die Stahlindustrie und Schwefeldioxid umgesetzt werden, wobei das Schwefeldioxid wiederum für die schmelzmetallurgische Umsetzung (Schritt b2) der Schmelzen aus Schritt a) zu Eisensulfiden und elementarem Phosphor zur Verfügung steht.

Während bei der Oxidation der Schmelze von Eisenphosphiden in Gegenwart von Ca- und Al-Trägern zur Bildung von P2O5 und Kalk-Aluminium-Eisenverbindungen die im Reduktionsschritt a) gebildeten Eisenphosphide im Gleichgewicht mit den Kalk-Aluminium-Eisenverbindungen stehen, gelingt mit der Umsetzung (Oxidation) in Gegenwart von elementarem Schwefel und/oder Schwefelträgern (Schwefelverbindungen) eine quantitative Freisetzung von elementarem Phosphor.

Gemäß einer bevorzugten Ausführungsform der vorliegenden Erfindung wird hierbei so vorgegangen, dass das in Schritt b1) gebildete P₂O₅ dem Schritt a) zugeführt wird zur Bildung von elementarem Phosphor. In diesem Fall wird das gebildete P₂O₅ erneut dem Reduktionsschritt a) zugeführt und dort zu elementarem Phosphor reduziert.

Bevorzugt wird bei dem Schritt a) Kohlestaub und Sauerstoff bei einem unterstöchiometrischen Verbrennungssauerstoffverhältnis, bevorzugt bei einem Verbrennungssauerstoffverhältnis von *λ*=0,2 bis *λ*=0,8, bevorzugt *λ*=0,4, zugeführt, wodurch es gelingt, den Verbrauch von relativ teuren Kohlenstoffträgern wie metallurgischem Koks, Graphit oder von Holzkohle zu vermindern, die bei der Führung des erfindungsgemäßen Verfahren als schmelzmetallurgisches Verfahren in einer induktiv beheizten Retorte als induktiv koppelbarer Kohlenstoffträger benötigt werden. Der Kohlestaub wird je nach dem Verbrennungssauerstoffverhältnis und der Reaktionstemperatur, bei der die Reduktion betrieben wird, oxidativ zu Kohlenmonoxid vergast und steht somit zur Energiegewinnung durch Verbrennung zur Verfügung.

Es ist weiters bevorzugt, bei dem Schritt a) elementaren Wasserstoff zuzuführen, mit dem in vorteilhafter Weise ungefähr bis zu einem Drittel des gesamten benötigten Reduktionspotentials bereitgestellt werden kann. Der Wasserstoff wird bei der Reduktion zu Wasser oxidiert und kann in der Folge mit Kohlenstoff in einer endothermen Reaktion zu Kohlenmonoxid und wiederum Wasserstoff umgesetzt werden (heterogene Wassergasreaktion). Der Wasserstoff kann somit zur Reduktion der eisen(oxid)haltigen Phosphor- und/oder Phosphatträger regeneriert werden und durch die endotherme Natur der Reaktion von Wasser mit Kohlenstoff zu Kohlenmonoxid und Wasserstoff kann der Kühlbedarf des Prozessgases des erfindungsgemäßen Verfahrens verringert und sinnvoll genutzt werden.

Um die Schlackenschmelze während der Reduktion möglichst dünnflüssig zu halten, ist das erfindungsgemäße Verfahren bevorzugt dahingehend weitergebildet, dass bei dem Schritt a) die Basizität (CaO/SiO₂) der Schlackenschmelze durch Zugabe von Ca-Trägern und/oder Si-Trägern auf einen Wert von 0,75 bis 1,45, bevorzugt 0,8 bis 1,4, eingestellt wird.

Häufig enthalten die eingangs genannten eisen(oxid)haltigen Phosphatträger eine Reihe von unerwünschten und problematischen Begleitstoffen, die vor dem Reduktionsschritt aus abfallwirtschaftlichen Gründen und darüberhinaus zur Vermeidung von Verstopfungen und chemischen Kreisläufen in den Reduktionsvorrichtungen entfernt werden müssen. Das erfindungsgemäße Verfahren ist daher bevorzugt dahingehend weitergebildet, dass vor der Reduktion gemäß Schritt a) eine Voroxidation von Begleitstoffen der eisen(oxid)haltigen Phosphor- und/oder Phosphatträger erfolgt, wie z.B. Organika, Schwermetalle, Halogene, Alkalien und Schwefelverbindungen, unter Bildung einer Schmelze der eisen(oxid)haltigen Phosphor-und/oder Phosphatträger sowie unter Abziehen der die Begleitstoffe enthaltenden Gasphase, wobei die Schmelze der eisen(oxid)haltigen Phosphor- und/oder Phosphatträger der Reduktion gemäß Schritt a) unterzogen wird.

Für die Voroxidation wird im Falle der Aufarbeitung von Klärschlamm mit einem Trockensubstanzgehalt von ungefähr 65% unter Zugabe von Kalkträgern, insbesondere Kalkstein, Knochenmehl, Stahlwerksschlacke und/oder Zementofen-Bypass-Stäuben oxidiert, wobei die Voroxidation in einer Brennkammer unter Zuführung der eisen(oxid)haltigen Phosphor- und/oder Phosphatträger mittels eines sauerstoffhaltigen Gases erfolgt, wie dies einer bevorzugten Ausführungsform der vorliegenden Erfindung entspricht. Das Verbrennungssauerstoffverhältnis liegt hierbei bevorzugt bei *λ*=0,8 bis *λ*=1,2. Die Schmelze der eisen(oxid)haltigen Phosphor- und/oder Phosphatträger wird hierbei bei einer Temperatur von ungefähr 1500°C abgetrennt und die die Begleitstoffe enthaltende Gasphase bei ungefähr 1600°C abgezogen. Das Abgas enthält je nach Ausgangsmaterial H₂O, CO₂, CO, H₂, N₂, NO_{X}, Schwermetalldämpfe, Chlor und Chloride und andere Halogene bzw. Halogenide, Alkalien, insbesondere Natrium, Lithium und Kalium, SO₂ und dergleichen.

Um die Exergie, d.h. die fühlbare Wärme, des heißen Abgases nutzen zu können, ist das erfindungsgemäße Verfahren bevorzugt dahingehend weitergebildet, dass die die Begleitstoffe enthaltende Gasphase einem Kühlschritt unterzogen wird durch In-Kontakt-Bringen der Gasphase mit organischem Abfall, wie Altkunststoff, Elektro- und Elektronikschrott, Biomasse, Gärresten und Shredder-Leichtfraktion, und/oder durch In-Kontakt-Bringen der Gasphase mit Kalkstein, Kalkmergel, Zementklinker-Rohmehl und/oder Kaolin. Durch diesen Kühlschritt wird die Wärme des Abgases der Voroxidation zum Aufarbeiten weiterer Abfallstoffe verwendet, wobei die vollständige Umsetzung der Abfallstoffe bevorzugt in einem Flugstromvergaser vorgenommen wird. Alternativ oder zusätzlich kann die Wärme des Abgases der Voroxidation bevorzugt auch zur Kalzination von Kalkstein, Kalkmergel, Zementklinker-Rohmehl und/oder Kaolin verwendet werden.

Die Abgastemperatur wird hierbei bevorzugt auf ungefähr 600°C gesenkt, wonach bevorzugt das Abgas des Kühlschritts zur Dampferzeugung verwendet wird und feste Reststoffe von gasförmigem H₂ und/oder CO abgefiltert werden. Die abgefilterten Reststoffe können Zink, Kupfer, Cadmium, Quecksilber, Blei, Chlor, Natrium, SO_{X}, Alkalien, Erdalkalien und dgl. umfassen und fallen im Filter als Konzentrat an und können entsprechend in der Metallurgie bekannten Verfahren weiter aufgereinigt werden. H₂ und CO bilden sogenanntes Synthesegas, welches in bekannter Weise durch Verbrennung oder als metallurgisches Reduktionsmittel sowie zur Methanol-Synthese oder in der Fischer-Tropsch-Synhese oder auch im Teilkreislauf zur Reduktion im Reduktionsschritt gemäß Schritt a) des erfindungsgemäßen Verfahrens genutzt werden kann.

Alternativ hierzu kann das Abgas des Kühlschritts in einer Wassergas-Shift-Reaktion zu H₂ und CO₂ umgesetzt werden und feste Reststoffe von H₂ und CO₂ abgefiltert werden, wobei die Reststoffe wiederum, wie zuvor beschrieben, als Konzentrat anfallen und H₂ und CO als Synthesegas erhalten werden.

Der Schritt der Voroxidation kann von den erfindungsgemäßen Schritten der Reduktion und Oxidation getrennt werden, indem die Schmelze der eisen(oxid)haltigen Phosphor- und/oder Phosphatträger vor der Reduktion des Schritts a) gekühlt und bevorzugt granuliert wird, wie dies einer bevorzugten Ausführungsform des erfindungsgemäßen Verfahrens entspricht. Auf diese Weise wird aus der heißen Phosphatschlackenschmelze ein unkritisch handhabbares festes Zwischenprodukt, welches auch an einem anderen Ort weiterverarbeitet werden kann, wenn der Umgang mit Phosphor insbesondere in elementarer Form aus zulassungstechnischen Gründen am Ort der Übernahme von eisen(oxid)haltigen Phosphatträgern, wie z.B. Klärschlamm, nicht gewünscht oder nicht möglich ist. Das Kühlen und bevorzugte Granulieren der Schmelze kann beispielsweise auf einem Zinnbad erfolgen, wie dies in der AT 521769 A1 beschrieben ist.

Gemäß einer bevorzugten Ausführungsform der vorliegenden Erfindung erfolgt die Reduktion gemäß Schritt a) mittels einer für die eisen(oxid)haltigen Phosphor- und/oder Phosphatträger reduktiven Säule aus Kohlenstoffträgern, bevorzugt aus Koks, Holzkohle, Graphit und/oder Kohlestaub, bevorzugt versetzt mit Biomasse und/oder Pyrolysat organischer Verbindungen. Derartige reduktive Säulen aus Kohlenstoffträgern sind im Stand der Technik bereits bekannt und werden für die schmelzmetallurgische Reduktion, beispielsweise induktiv, auf hohen Temperaturen gehalten. Je nach Verfahrensweise muss Kohlenstoff ggf. laufend ergänzt werden, um Verluste durch Vergasungsprozesse und durch die eigentlichen Reduktionsprozesse auszugleichen.

Bevorzugt ist es hierbei vorgesehen, dass die reduktive Säule durch Einblasen von Sauerstoff auf Reaktionstemperatur gehalten wird, wobei das Einblasen von Sauerstoff selbstverständlich nur in einer Menge erfolgt, die zwar der Aufrechterhaltung der Reaktionstemperatur zuträglich ist, jedoch das Reduktionspotential der Kohlenstoffsäule für die Phosphat- und Eisen(oxid)anteile nicht beeinträchtigt. Bevorzugt kann hierbei auch dergestalt vorgegangen werden, dass die reduktive Säule durch elektromagnetische Induktion auf Reaktionstemperatur gehalten wird, wie dies einer bevorzugten Ausführungsform der vorliegenden Erfindung entspricht. Induktion kann zusätzlich zum Einblasen von Sauerstoff oder als alleiniges Mittel zur Aufrechterhaltung der für die Reduktionsprozesse nötigen hohen Temperaturen gewählt werden, wobei das induktive Beheizen der Kohlenstoffsäule zu einer höheren Ausbeute elementaren Phosphors durch Verminderung des Anteils an CO und Erhöhung des P₂-Partialdruckes im Prozessgas führt.

Bevorzugt werden als Reaktionsprodukte der Reduktion gemäß Schritt a) P₄ sowie CO in der Gasphase und die Schmelze von Eisenphosphiden sowie die Schlackenschmelze am Boden der Säule abgezogen, wobei, wie bereits erwähnt, der Anteil von CO je nach der Art, auf welche die Reaktionstemperatur in der reduktiven Säule aufrechterhalten wird, höher oder niedriger ausfallen kann. Bei dieser Ausführung wird somit ein Teil des Phosphors bzw. der Phosphate bereits im Reduktionsschritt als elementarer Phosphor in der Gasphase abgetrennt von Eisenbestandteilen erhalten.

Neben der Möglichkeit, die Oxidation der Eisenphosphide mit elementarem Sauerstoff oder Schwefel direkt im Schmelzebad oder in einer separaten metallurgischen Pfanne durch Einblasen von O₂ oder Schwefel mittels Lanzen oder Bodendüsen durchzuführen, wobei Schwefel sowohl als Feststoff als auch als Schwefeldampf eingebracht werden kann, wird hinsichtlich der Schritte b1) und/oder b2) des erfindungsgemäßen Verfahrens gemäß einer bevorzugten Ausführungsform der vorliegenden Erfindung dergestalt vorgegangen, dass die Schritte b1) und/oder b2) in einem Flugstromreaktor durch Zerstäubung der Schmelze von Eisenphosphiden mittels eines Gasstroms, bevorzugt bestehend aus oder enthaltend Sauerstoffträger wie O₂, H₂O, Luft und/oder CO₂, und bevorzugt unter Zugabe von Ca-und Al-Trägern und/oder elementarem Schwefel und/oder Schwefelträgern, erfolgt bzw. erfolgen. Wie schon bei Schritt a) wird eine feinteilige Zerstäubung der zu oxidierenden Edukte angestrebt, sodass die Eisenphosphide mit einer möglichst großen Oberfläche in der oxidierenden Umgebung des Flugstromreaktors vorliegen und in intensiven Kontakt mit dem zugegebenen Ca- und Al-Trägern bzw. dem elementarem Schwefel und/oder den Schwefelträgern treten. Ein Flugstromreaktor zur Verwendung in diesem Oxidationsschritt ist beispielsweise in der österreichischen Patentschrift AT 518 979 B1 gezeigt, wobei die dortige Offenbarung hinsichtlich der Zugabe von Ca und Al-Trägern bzw. des elementaren Schwefels und/oder der Schwefelträgern angepasst werden muss. Wesentlich jedoch ist, dass die Schmelze der Eisenphosphide aus einem Tundish bzw. feuerfest ausgekleideten Vorratsbehälter bzw. einer Gusspfanne über einen Auslauf, der beispielsweise ein Wehrrohr umfasst, in einen Flugstromreaktor ausgestoßen werden kann, wobei im Gegensatz zur Offenbarung der AT 518 979 B1 beim vorliegenden Verfahren oxidierende Bedingungen durch Zugabe von O₂ oder Sauerstoffträgern wie Luft, O₂ oder H₂O oder Schwefel eingestellt werden, und durch weitere Zugabe von Ca- und Al-Trägern und/oder elementarem Schwefel und/oder Schwefelträgern die nötige Selektivität des Verfahrens zum Abtrennen der Phosphorverbindungen von den Eisenverbindungen sichergestellt wird.

Das erfindungsgemäße Verfahren ist bevorzugt dergestalt ausgebildet, dass als Reaktionsprodukte der Oxidation gemäß Schritt b1) P₂O₅ in der Gasphase von Kalk-Aluminium-Eisenverbindungen, insbesondere Brownmillerit, abgetrennt werden. Wie bereits erwähnt, haben die Kalk-Aluminium-Eisenverbindungen und insbesondere Brownmillerit keinerlei chemische Affinität zu P₂O₅, sodass eine quantitative Trennung dieser Verbindungen von den Phosphoranteilen erfolgt. Phosphor und Phosphoroxide können in der Folge nach bekannten Verfahren weiterverarbeitet werden und die Kalk-Aluminium-Eisenverbindungen können beispielsweise in der Zementindustrie in Portlandklinker als Sinterhilfsmittel eingearbeitet werden.

Das erfindungsgemäße Verfahren ist weiters bevorzugt dergestalt ausgebildet, dass als Reaktionsprodukte der Umsetzung gemäß Schritt b2) Eisensulfide von elementarem Phosphor abgetrennt werden. Die Eisensulfide haben keinerlei Affinität zu dem elementaren Phosphor, sodass eine quantitative Trennung dieser Verbindungen von den Phosphoranteilen erfolgt.

Bevorzugt erfolgt die Abtrennung von P₂O₅ von Kalk-Aluminium-Eisenverbindungen und/oder die Abtrennung von Eisensulfiden von elementarem Phosphor mittels eines Zyklons. Auch dies stellt eine andere Vorgehensweise dar, als sie in der österreichischen Patentschrift AT 518 979 B1 gezeigt ist, stellt jedoch für den Fachmann kein nennenswertes Problem dar. Beispielsweise kann dies auch wie zuvor beschrieben im oxidierend betriebenen Schmelzebad extern durchgeführt werden.

Alternativ zur Durchführung des Oxidationsschrittes gemäß Schritt b1) in einem Flugstrom- bzw. Direktoxidationsreaktor kann Schritt b1) bevorzugt auch dergestalt durchgeführt werden, dass die Oxidation der Schmelze von Eisenphosphiden zu P₂O₅ und die Bildung von Kalk-Aluminium-Eisenverbindungen, insbesondere Brownmillerit, in einem Bodenbereich der reduktiven Säule erfolgt, indem ein gasförmiger Sauerstoffträger, bevorzugt versetzt mit zumindest einem Aluminiumträger, durch die Schmelze von Eisenphosphiden geblasen wird und die Eisenphosphide auf diese Art mit auf der Schmelze von Eisenphosphiden schwimmender Schlackenschmelze aus Schritt a) zur Bildung von P₂O₅ und Kalk-Aluminium-Eisenverbindungen, bevorzugt Brownmillerit, in Kontakt gebracht werden. In diesem Fall ist die reduktive Säule im Bereich der Aufgabe der eisen(oxid)haltigen Phosphor- und/oder Phosphatträger für die Phosphat- und Eisen(oxid)anteile reduktiv und behält diese reduktiven Eigenschaften auch in einem vom Bereich der Aufgabe nach unten anschließenden Bereich zur vollständigen Umsetzung der Phosphatanteile und Eisen(oxid)anteile zur Bildung der Schmelzen der Eisenphosphide und der Schlacke, und es wird lediglich am Boden der Säule ein für die Eisenphosphide oxidierendes Milieu durch Einblasen von Sauerstoffträgern geschaffen, wobei durch das Einblasen eine mechanische Durchmischung der Schmelzen von Eisenphosphiden und der Schlackenschmelze erfolgt und auf diese Weise bei Anwesenheit von Aluminiumträgern die Umsetzung der Schlackenschmelze zu Kalk-Aluminium-Eisenverbindungen, insbesondere Brownmillerit, erfolgt, welches, wie bereits mehrfach erwähnt, keinerlei chemische Affinität zu den durch das Einblasen von Sauerstoffträgern zu P₂O₅ oxidierten Phosphoranteilen aufweist. Bevorzugt wird die die Oxidation der Schmelze von Eisenphosphiden zu P₂O₅ bei Temperaturen von mindestens 1350°C durchgeführt. Die selektive Abtrennung von P₂O₅ und seinen Verbindungen von den Kalk-Aluminium-Eisenverbindungen erfolgt somit in einem einzigen kontinuierlich betreibbaren Verfahrensabschnitt. Das gebildete P₂O₅ strömt in der Folge in die reduktive Säule und wird dort zu P₂ reduziert. An dieser Stelle kann mit einem Überschuss an O₂ gearbeitet werden.

Gemäß einer bevorzugten Ausführungsform dieser erfindungsgemäßen Verfahrensalternative werden P₂O₅ in der reduktiven Säule zu P₂ und CO umgesetzt und P₂ und CO in der Gasphase abgezogen, wenn das am Boden der Säule gebildete P₂O₅ in der weiter oben wiederum reduktiven Säule aufsteigt und dort zu elementarem Phosphor reduziert wird. Durch entsprechende Zudosierung von O₂ in die reduktive Säule, was, wie bereits erwähnt, auch zur Aufrechterhaltung einer geeigneten Reaktionstemperatur notwendig sein kann, können die Anteile von P₂ und CO in der Gasphase über einen gewissen Bereich eingestellt werden.

Eine erfindungsgemäße Vorrichtung zur Durchführung des erfindungsgemäßen Verfahrens ist gemäß einer ersten Alternative für die Verarbeitung von, ggf. granulierter, Schmelze der Phosphat- und Eisen(oxid)anteile, wie dies weiter oben beschrieben wurde, dergestalt ausgeführt, dass sie ein feuerfest ausgekleidetes, entlang einer Längsachse symmetrisches oder rotationssymmetrisches Gehäuse und eine in dem Gehäuse angeordnete, für die eisen(oxid)haltigen Phosphor-und/oder Phosphatträger reduktive Säule aus, bevorzugt induktiv beheizten, Kohlenstoffträgern, bevorzugt aus Koks, Graphit und/oder Kohlestaub, bevorzugt versetzt mit Biomasse und/oder Pyrolysat organischer Verbindungen, umfasst, wobei das Gehäuse entlang der Längsachse einen Bereich mit sprunghaft vergrößertem Durchmesser unter Ausbildung eines Ringraums zwischen dem Gehäuse und der Säule aufweist, wobei die erfindungsgemäße Vorrichtung dadurch gekennzeichnet ist, dass in dem Bereich der sprunghaften Vergrößerung des Durchmessers zumindest eine Aufgabevorrichtung für Schmelzen der eisen(oxid)haltigen Phosphor- und/oder Phosphatträger in den Ringraum mündet. Die Schmelzen der eisen(oxid)haltigen Phosphor- und/oder Phosphatträger werden im Zusammenhang mit der vorliegenden Erfindung auch als Vorschlackenschmelze bezeichnet. Diese erfindungsgemäße Vorrichtung stellt somit einen Reaktor mit einer darin angeordneten reduktiven Säule zur Verfügung, der durch die sprunghafte Vergrößerung des Durchmessers einen Ringraum zur Verfügung stellt, in den die Schmelze der eisen(oxid)haltigen Phosphor- und/oder Phosphatträger aus der Voroxidation zur Reduktion eingebracht werden können. Die Oberfläche der Säule im Ringraum unterhalb eines kompakten Abschnitts der Säule, der als Vorwärmbereich für die Kohlenstoffträger und ggf. für granulierte, oxidierte Vorschlackenschmelze dient, kann somit als Reduktionsherd angesehen werden, an bzw. in welchem die fest oder schmelzflüssig eingebrachten Edukte, nämlich die Schmelzen der eisen(oxid)haltigen Phosphor- und/oder Phosphatträger, ggf. aufgeschmolzen und bei Eindringen in die Säule reduziert werden. Die Eisenphosphide und deren Vorstufen wandern aufgrund der Schwerkraft in der Säule nach unten und werden dabei vollständig reduziert, um sich am Boden der Säule anzusammeln. Zum Ausgleich von Kohlenstoffverlusten, aufgrund der Vergasungsvorgänge und der Reduktionsreaktionen, werden am oberen Ende der erfindungsgemäßen Vorrichtung, d.h. am oberen Ende des kompakten Abschnitts der reduktiven Säule Koks, Graphit oder ähnliche Kohlenstoffträger, wie zuvor beschrieben, aufgegeben, welche aufgrund der Vergasungsvorgänge in diesem Bereich vorgewärmt und erhitzt werden, sodass im Bereich des Ringraums bereits die nötige Reaktionstemperatur zur Reduktion zur Verfügung steht. In dem genannten kompakten Abschnitt der reduktiven Säule finden neben der Vorwärmung endotherme Reaktionen statt, wie zum Beispiel bereits eine Vorreduktion der Edukte oder heterogene Wassergasreaktionen.

Um die Verteilung von festen und/oder schmelzflüssigen Phosphat- und Eisenoxidfraktionen auf der Oberfläche der reduktiven Säule im Bereich des bereits erwähnten Reduktionsherds zu gewährleisten, kann die zumindest eine Aufgabevorrichtung mit einer Mehrzahl von im Bereich mit sprunghaft vergrößertem Durchmesser radial angeordneten und tangential in den Ringraum gerichteten Düsen für den Eintrag eines sauerstoffhaltigen Gases und bevorzugt Kohlestaub zusammenwirken, wie dies einer bevorzugten Ausführungsform der vorliegenden Erfindung entspricht. Durch das durch die Düsen einbringbare sauerstoffhaltige Gas, ggf. versetzt mit Kohlestaub oder Klärschlammasche, wird im Ringraum für eine gleichmäßige Zerscherung bzw. Verteilung der staubförmigen oder schmelzflüssigen Edukte gesorgt, sodass diese im gesamten Ringraum verteilt und somit gleichmäßig auf die reduktive Säule aufgebracht werden können. Auf diese Weise werden Verstopfungen, Verbackungen sowie die Ausbildung von Kaminen in der reduktiven Säule vermieden und eine gleichmäßige und effektive Reduktion der fest oder schmelzflüssig eingebrachten Edukte sichergestellt.

Um für gleichmäßige Strömungsverhältnisse über die gesamte Länge der erfindungsgemäßen Vorrichtung zu sorgen, ist es gemäß einer bevorzugten Ausführungsform der vorliegenden Erfindung vorgesehen, dass in dem Bereich mit dem vergrößerten Durchmesser ein zentraler Zylinder zur Ausbildung einer Ringsäule in diesem Bereich angeordnet ist. Die Anordnung eines zentralen Zylinders zur Ausbildung einer Ringsäule verhindert zum Einen, dass die reduktive Säule in dem Bereich nach der sprunghaften Vergrößerung des Durchmessers einen vielfach erhöhten effektiven Querschnitt für den Durchtritt von Reaktionsgasen aufweist, was hinsichtlich der Ausbildung von gleichmäßigen und somit definierten Druckbedingungen in der gesamten erfindungsgemäßen Vorrichtung notwendig sein kann, und verringert zum Anderen den Gesamtbedarf der erfindungsgemäßen Vorrichtung an Kohlenstoffträgern, da im Volumen des zentralen Zylinders selbstverständlich keine Kohlenstoffträger vorzusehen sind. Außerdem können die Kohlenstoffträger nur bis zu einer gewissen radialen Tiefe mittels Induktion beheizt werden, sodass durch die Ausbildung einer Ringsäule für eine gleichmäßige Durchwärmung der Kohlenstoffträger mittels Induktion gesorgt werden kann. Der Zylinder ist hierbei bevorzugt aus demselben Material gebildet wie das Gehäuse selbst und selbstverständlich ebenfalls feuerfest verkleidet. Der Zylinder ist an seinem oberen Ende abgedeckt und weist bevorzugt eine kegelförmige oder halbkugelförmige Abdeckung auf.

Zur Einstellung der Reduktionsbedingungen und zur Aufrechterhaltung der notwendigen Reaktionstemperatur im Bereich der Ringsäule kann es gemäß einer bevorzugten Ausführungsform der vorliegenden Erfindung vorgesehen sein, dass der zentrale Zylinder eine Mehrzahl von Öffnungen zum Einblasen eines sauerstoffhaltigen Gases in die Ringsäule aufweist.

Gemäß einer bevorzugten Ausführungsform der vorliegenden Erfindung kann es weiters vorgesehen sein, dass im zentralen Zylinder eine Induktionsvorrichtung angeordnet ist. Diese dient dazu, die reduktive Säule zusätzlich von innen induktiv zu erhitzen, was bei einer entsprechenden voluminösen Säule notwendig sein kann.

Bevorzugt ist es vorgesehen, dass am Boden des Gehäuses ein weiterer Bereich mit sprunghaft vergrößertem Durchmesser unter Ausbildung eines Ringraums zwischen dem Gehäuse und der Ringsäule angeordnet ist, der zum Abziehen bzw. Abstechen von Schmelzen, bevorzugt in einen Vorherd zur Trennung der Schmelzen, ausgebildet ist. Dieser weitere Bereich mit sprunghaft vergrößertem Durchmesser bildet somit am Boden des Gehäuses bzw. der Ringsäule eine Art Tundish bzw. Schmelztasse bzw. Gusspfanne aus und dient dazu, die bei der Reduktion gebildeten Reaktionsprodukte aufzufangen und zu sammeln.

Wie schon im Zusammenhang mit einer bevorzugten Ausführungsform des erfindungsgemäßen Verfahrens beschrieben, können die Schritte b1) bzw. b2) des erfindungsgemäßen Verfahrens bei dieser erfindungsgemäßen Vorrichtung integriert erfolgen, wenn der weitere Bereich mit sprunghaft vergrößertem Durchmesser mit Düsen zum Durchblasen eines sauerstoffhaltigen Gases, bevorzugt versetzt mit zumindest einem Aluminiumträger, durch die Schmelze von Eisenphosphiden ausgebildet ist, wie dies einer bevorzugten Ausführungsform der vorliegenden Erfindung entspricht. Bei dieser einstufigen Variante erfolgt somit die Oxidation der Eisenphosphide am Boden der ansonsten für Phosphatanteile reduktiven Säule, wobei die Eisenphosphide mit der darüberliegenden Schlackenschmelze in Kontakt treten, die, wenn nötig, mit Aluminiumträgern versetzt wird, wodurch die selektiven Kalk-Aluminium-Eisenverbindungen, insbesondere Brownmillerit, gebildet werden und P₂O₅ durch die Säule aufsteigt und dabei wiederum zu P₂ und CO reduziert wird.

Gemäß einer bevorzugten Ausführungsform der vorliegenden Erfindung kann der weitere Bereich mit sprunghaft vergrößertem Durchmesser mit Düsen zum Durchblasen von elementarem Wasserstoff ausgebildet sein. Bei dieser bevorzugten Variante kann somit das Reduktionspotential der reduktiven Säule, wie bereits oben beschrieben, entsprechend eingestellt werden und insbesondere bis zu einem Drittel des für die Reduktion vorgesehen Reduktionspotentials durch Wasserstoff bereitgestellt werden.

Eine weitere bevorzugte Ausführungsform der vorliegenden Erfindung sieht vor, dass an den Bereich mit dem vergrößerten Durchmesser eine Mehrzahl von jeweils entlang einer Längsachse symmetrischen, feuerfest ausgekleideten rohrförmigen Teilen des Gehäuses mit in den rohrförmigen Teilen angeordneten, für die eisen(oxid)haltigen Phosphor- und/oder Phosphatträger reduktiven Säulen aus Kohlenstoffträgern, bevorzugt aus Koks und/oder Kohlestaub, bevorzugt versetzt mit Biomasse und/oder Pyrolysat organischer Verbindungen, anschließt. Dies bedeutet, dass die reduktive Säule in eine Mehrzahl von reduktiven Einzelsäulen aufgeteilt wird, wodurch eine relative hohe Reduktionsrate bei gleichzeitig geringen Durchmessern der reduktiven Kohlenstoffträgerschüttung bereitgestellt wird. Der bevorzugte Durchmesser der rohrförmigen Teile des Gehäuses liegt bei 600 mm bis 1000 mm, um eine zufriedenstellende Ankupplung durch Induktion der Einzelsäulen zu gewährleisten. Dies hat zum einen Vorteile hinsichtlich der Strömungsverhältnisse in den einzelnen reduktiven Säulen und zum anderen können die einzelnen Säulen einzeln induktiv beheizt werden, sodass auch bei hohen Durchsätzen ausreichend hohe Reaktionstemperaturen sichergestellt werden können.

Zu diesem Zweck können die rohrförmigen Teile des Gehäuses jeweils von einer Induktionsspule umfasst sein, wie dies einer bevorzugten Ausführungsform der vorliegenden Erfindung entspricht. Auf diese Weise kann eine große Gesamtmenge der reduktiven Säule induktiv beheizt werden.

Eine alternative Vorrichtung zur Durchführung des erfindungsgemäßen Verfahrens umfasst ein feuerfest ausgekleidetes Gehäuse und eine in dem Gehäuse angeordnete, bevorzugt induktiv beheizte, für die eisen(oxid)haltigen Phosphor- und/oder Phosphatträger reduktive Säule aus Kohlenstoffträgern, bevorzugt aus Koks und/oder Kohlestaub, bevorzugt versetzt mit Biomasse und/oder Pyrolysat organischer Verbindungen, und ist erfindungsgemäß dadurch gekennzeichnet, dass das Gehäuse entlang seiner Längsachse einen Versprung, bevorzugt eine Kröpfung, unter Ausbildung eines Hohlraums zwischen dem Gehäuse und der Säule aufweist, wobei in dem Bereich des Versprungs zumindest eine Aufgabevorrichtung für flüssige Schmelze der eisen(oxid)haltigen Phosphor- und/oder Phosphatträger in den Hohlraum mündet. Diese Variante einer erfindungsgemäßen Vorrichtung zur Durchführung des erfindungsgemäßen Verfahrens stellt somit eine Abwandlung der zuvor beschriebenen Variante eines Reduktionsreaktors mit einem sprunghaft vergrößerten Durchmesser des Gehäuses dar, bei der jedoch kein Ringraum ausgebildet wird, sondern lediglich im Bereich des Versprungs ein Hohlraum zwischen dem Gehäuse und der reduktiven Säule gebildet wird, in den schmelzflüssige Produkte der Voroxidation, somit flüssige Edukte der Reduktion auf die Oberfläche der reduktiven Säule aufgebracht werden können, wobei hier in gleicher Weise an der Oberfläche der Säule ein Reduktionsherd gebildet wird, in dem die Phosphatanteile zu Eisenphosphiden reduziert werden und sich aufgrund der Schwerkraft durch die Säule nach unten bewegen und am Boden sammeln. Im Bereich oberhalb des Versprungs ist wiederum ein Vorwärmbereich für die Kohlenstoffträger und ggf. Phosphatschlackengranulat vorgesehen, wie dies bereits im Zusammenhang mit der vorangegangenen erfindungsgemäßen Vorrichtung beschrieben wurde. In diesem Bereich können somit stückige Kohlenstoffträger und festes Phosphatschlackengranulat aufgegeben werden.

Zum Aufrechterhalten der erforderlichen Reaktionstemperatur für die Reduktion weist das Gehäuse bevorzugt eine Mehrzahl von Öffnungen zum Einblasen eines sauerstoffhaltigen Gases in die Säule bzw. die Kohlenstoffträgerschüttung auf, wodurch endotherme Reduktionsprozesse in der Kohlenstoffschüttung der reduktiven Säule aufrechterhalten werden. Alternativ oder zusätzlich kann es gemäß einer bevorzugten Ausführungsform der vorliegenden Erfindung vorgesehen sein, dass im Bereich unterhalb des Versprungs des Gehäuses eine Induktionsvorrichtung für die reduktive Kohlenstoffschüttung der reduktiven Säule angeordnet ist.

Gemäß einer bevorzugten Ausführungsform der vorliegenden Erfindung ist am Boden des Gehäuses ein weiterer Versprung des Gehäuses unter Ausbildung eines Hohlraums zwischen dem Gehäuse und der Säule angeordnet, der zum Abziehen bzw. Abstechen von Schmelzen, bevorzugt in einen Vorherd zur Trennung der Schmelzen, ausgebildet ist.

Bevorzugt sind im Bereich des weiteren Versprungs Düsen zum Durchblasen eines gasförmigen Sauerstoffträgers, bevorzugt versetzt mit zumindest einem Aluminiumträger, durch die Schmelze von Eisenphosphiden angeordnet. Dies bietet die Möglichkeit, wie bereits oben beschrieben, auch die Oxidation in Gegenwart von Ca- und Al-Trägern mit der ansonsten reduktiv eingestellten Kohlenstoffträgerschüttung in der Vorrichtung durchzuführen.

Alternativ oder zusätzlich kann der weitere Bereich mit sprunghaft vergrößertem Durchmesser mit Düsen zum Durchblasen von elementarem Wasserstoff ausgebildet sein, wie dies einer bevorzugten Ausführungsform der vorliegenden Erfindung entspricht. Auf diese Weise kann, wie bereits oben beschrieben, dem Schritt der Reduktion der eisen(oxid)haltigen Phosphor- und/oder Phosphatträger elementarer Wasserstoff zugeführt werden, mit dem in vorteilhafter Weise ungefähr bis zu einem Drittel des gesamten benötigten Reduktionspotentials bereitgestellt werden kann. Der Wasserstoff wird bei der Reduktion der eisen(oxid)haltigen Phosphor- und/oder Phosphatträger zu Wasser oxidiert und kann in der Folge mit Kohlenstoff in einer endothermen Reaktion zu Kohlenmonoxid und wiederum Wasserstoff umgesetzt werden. Der Wasserstoff kann somit zur Reduktion der eisen(oxid)haltigen Phosphor- und/oder Phosphatträger regeneriert werden und durch die endotherme Natur der Reaktion von Wasser mit Kohlenstoff zu Kohlenmonoxid und Wasserstoff kann der Kühlbedarf des Prozessgases des erfindungsgemäßen Verfahrens verringert werden.

Eine weitere erfindungsgemäße Vorrichtung zur Durchführung des erfindungsgemäßen Verfahrens soll dazu dienen, die im Schritt der Voroxidation, des Aufschmelzens bzw. die in Schritt a) des erfindungsgemäßen Verfahrens gebildeten Schmelzen zur Reduktionsvorrichtung zu bringen bzw. von der Reduktionsvorrichtung aufzunehmen, damit die Schmelze für Schritt b1) bzw. b2) des erfindungsgemäßen Verfahrens an einen anderen Ort, beispielsweise an den Ort des Betriebs des Flugstromreaktors zur Oxidation der Schmelzen zur Bildung von P₂O₅ und Kalk-Aluminium-Eisenverbindungen und/oder zur Umsetzung in Gegenwart von elementarem Schwefel und/oder Schwefelträgern zur Bildung von Eisensulfiden und elementarem Phosphor verbracht werden kann. Dies hat den Hintergrund, dass beim erfindungsgemäßen Verfahren in den Schritten a) und b2) elementarer Phosphor gebildet werden kann, der an sich schon höchst problematisch in der Handhabung ist, weshalb es wünschenswert sein kann, die Örtlichkeiten der einzelnen Verfahrensschritte trennen zu können und beim Transport zwischen den Örtlichkeiten der einzelnen Verfahrensschritte die erforderlichen Temperaturen der Schmelzen aufrecht erhalten bzw. einstellen zu können. Zusätzlich kann es wünschenswert sein, die Schlackenchemie gezielt einstellen zu können.

Aus diesem Grund, umfasst die erfindungsgemäße Vorrichtung zur Aufnahme von Schmelzen bevorzugt ein um eine Drehachse drehbar gelagertes, feuerfest ausgekleidetes Gehäuse mit zumindest einer einen Teilbereich des Gehäuses umspannenden Induktionsvorrichtung und zumindest einer der zumindest einen Induktionsvorrichtung gegenüberliegenden Öffnung. In dieser Vorrichtung können die Schmelzen aufgenommen werden und mit Hilfe eines in der Vorrichtung im Bereich der Induktionsvorrichtung vorgehaltenen, induktiv beheizten Zinnbades auf Temperatur gehalten werden, um in der Folge reduziert oder im Flugstromreaktor dem Schritt b1) bzw. b2) unterzogen zu werden. Die Zinnschmelze des Zinnbades wird bei Temperaturen von ungefähr 1500°C bis 1600°C gehalten und weist keine Affinität zu den Eisenphosphaten der oxidierten Vorschmelze (Phosphatschmelze) bzw. zu den Eisenphosphiden auf.

Bevorzugt ist im Bereich der Induktionsvorrichtung zumindest eine Öffnung zum Einblasen von Spülgas, bevorzugt Stickstoff, angeordnet, wodurch überhitzte Zinntröpfchen aus dem Zinnbad in die Schmelze der Eisenphosphide getrieben werden. Aufgrund der sehr großen Grenzfläche zwischen den Zinntröpfchen und der Schmelze der Eisenphosphide erfolgt eine sehr effiziente Wärmeübergabe von dem überhitzten Zinn an die Schmelze der Eisenphosphide.

Ebenso kann in dieser erfindungsgemäßen Vorrichtung eine Einstellung der Temperatur und/oder der chemischen Eigenschaften der Schlacken bzw. Schmelzen vorgenommen werden.

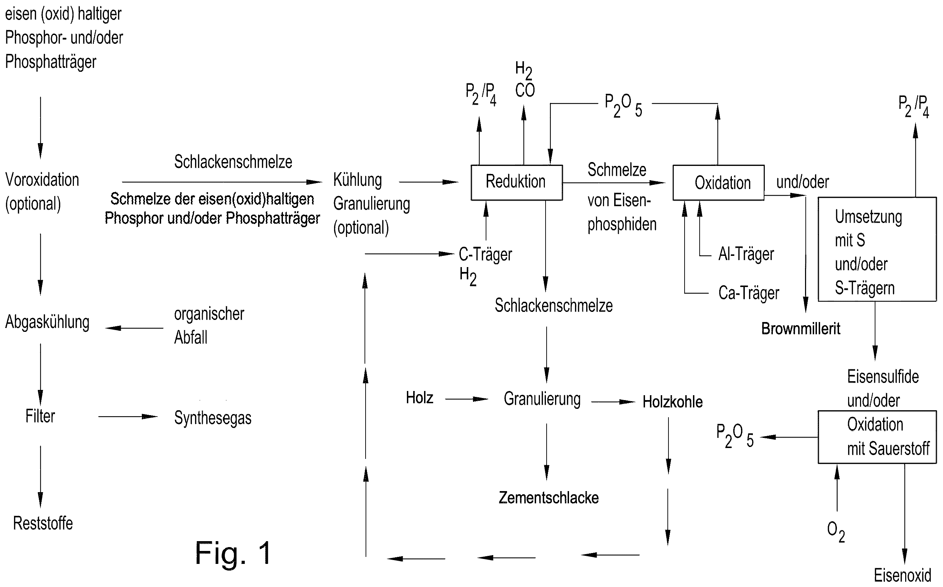

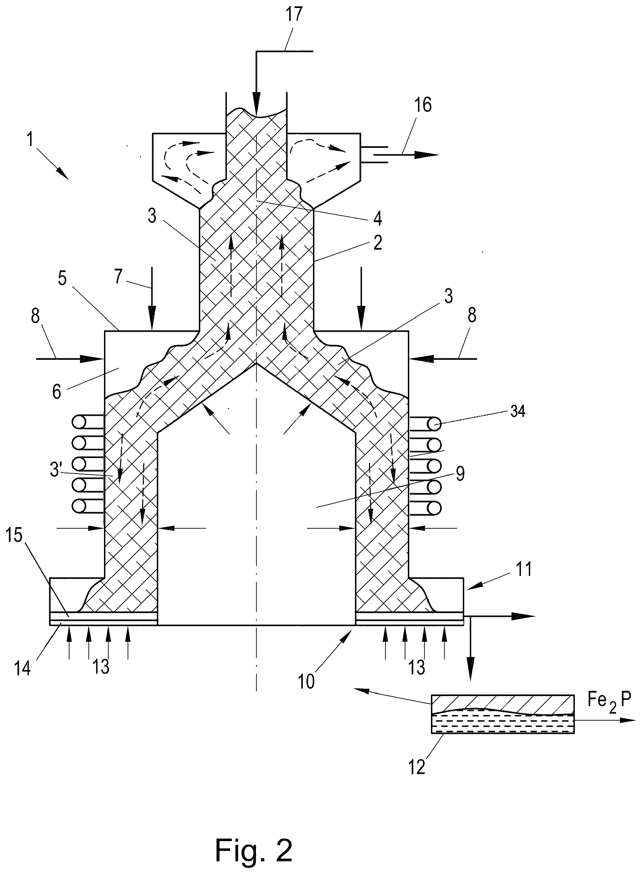

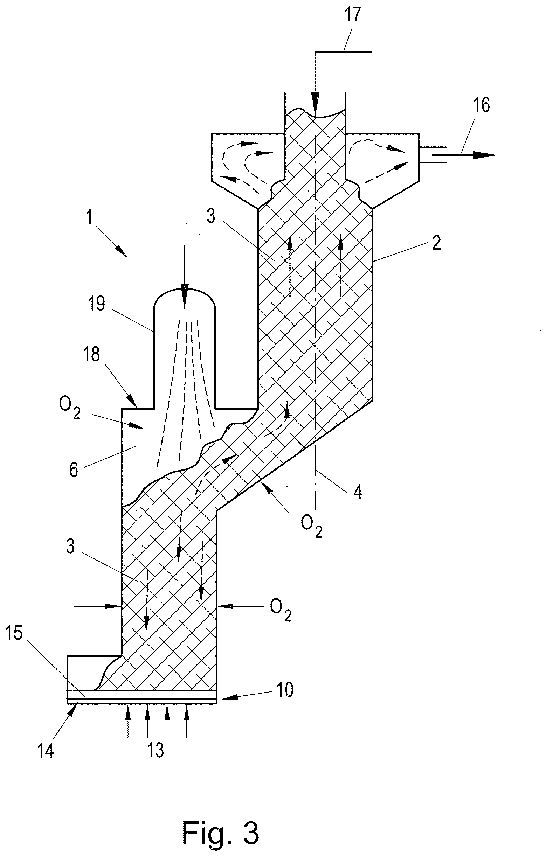

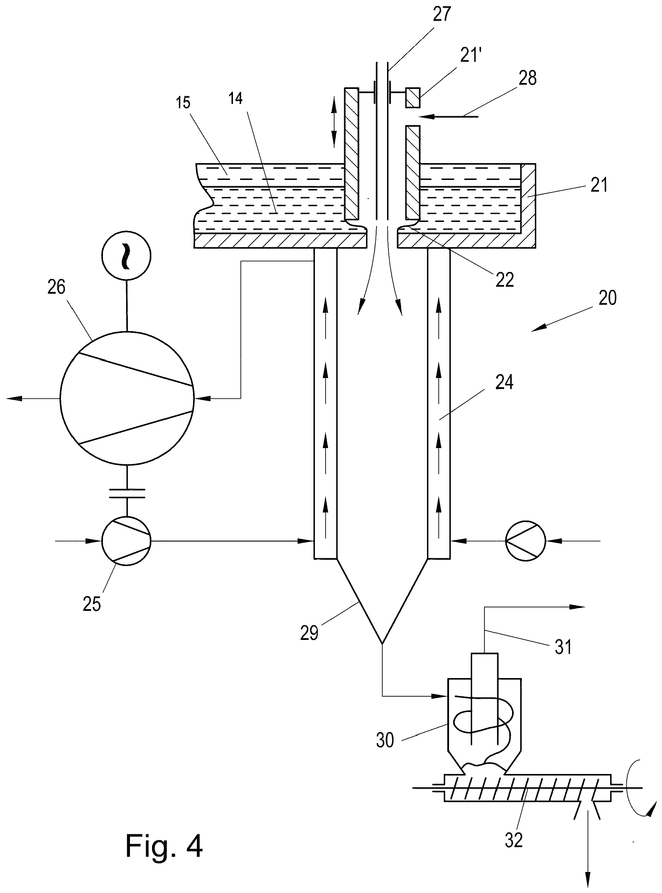

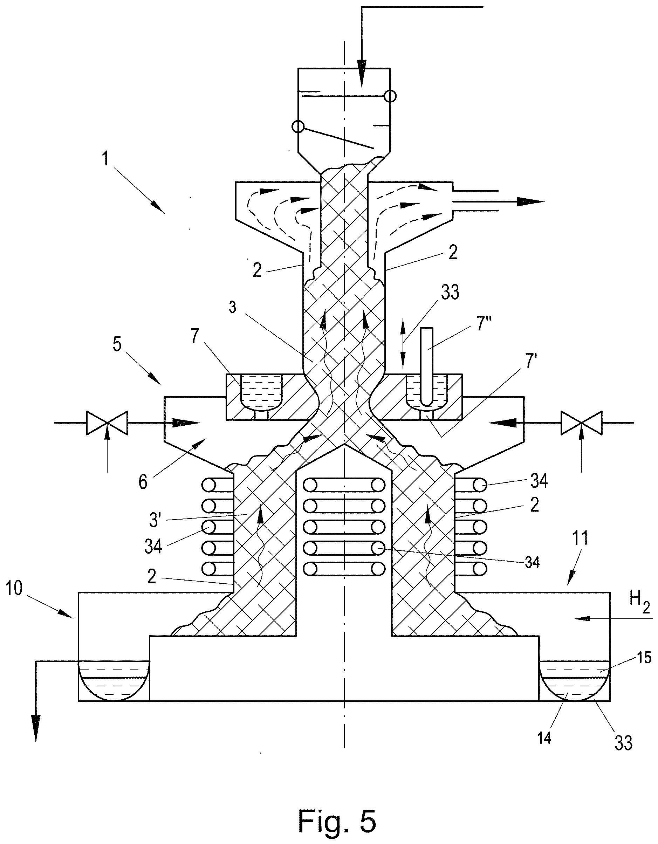

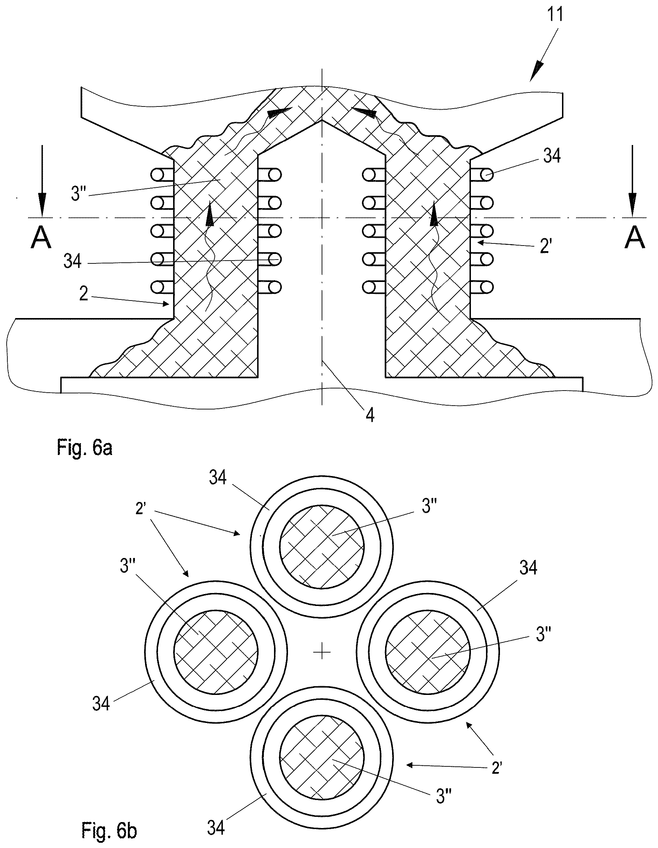

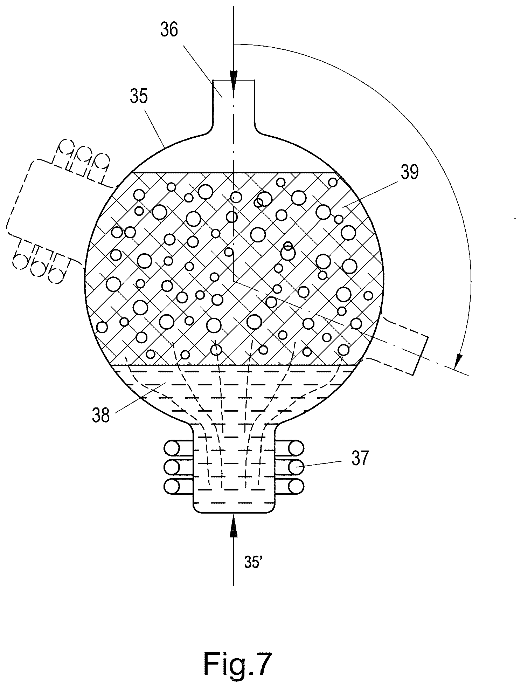

Die Erfindung wird nachfolgend anhand eines in der Zeichnung schematisch dargestellten Ausführungsbeispiels näher erläutert. In dieser zeigt Fig. 1 ein Übersichtsschema über das erfindungsgemäße Verfahren, Fig. 2 eine erste Variante einer erfindungsgemäßen Vorrichtung zur Durchführung des erfindungsgemäßen Verfahrens, Fig. 3 eine zweite Variante einer erfindungsgemäßen Vorrichtung zur Durchführung des erfindungsgemäßen Verfahrens, Fig. 4 eine Vorrichtung zur Durchführung von Schritt b1) bzw. b2) des erfindungsgemäßen Verfahrens, Fig. 5 eine bevorzugte Weiterbildung der ersten Variante der Vorrichtung gemäß Fig. 2, Fig. 6a eine dritte Variante einer erfindungsgemäßen Vorrichtung zur Durchführung von Schritt a) des erfindungsgemäßen Verfahrens im Längsschnitt und Fig. 6b einen Querschnitt der Vorrichtung gemäß Fig. 6a und Fig. 7 eine erfindungsgemäße Vorrichtung zur Aufnahme der in Schritt a) gebildeten Schmelze von Eisenphosphiden oder der oxidierten Phosphatschlackenschmelze.

In dem Schema gemäß Fig. 1 ist zu erkennen, dass die eisen(oxid)haltigen Phosphor- und/oder Phosphatträger in einem ersten Schritt entweder der optionalen Voroxidation zur Entfernung von Begleitstoffen, wie Organika, Schwermetallen, Alkalien, Halogenen, Schwefelverbindungen und dgl., oder direkt der Reduktion zugeführt werden können. Für den Fall, dass die eisen(oxid)haltigen Phosphor- und/oder Phosphatträger Klärschlamm oder Trockenklärschlamm, Tiermehl und Tiermehlasche oder Lebensmittelreste umfassen, ist jedenfalls eine Voroxidation empfehlenswert. Das Abgas der Voroxidation kann, wie vorstehend beschrieben, einer Abgaskühlung durch Inkontaktbringen des Abgases der Voroxidation mit organischem Abfall, wie beispielsweise Kunststoffen, Biomasse und Ähnlichem, unterzogen werden. Danach wird das gekühlte Abgas gefiltert, wodurch die Reststoffe, wie Schwermetalle, Halogene, Alkalien, Schwefelverbindungen und dgl., von dem gekühlten Gas getrennt werden, welches als Synthesegas zur Energiegewinnung oder als Reduktionsmittel oder als Rohstoff für die chemische Industrie (Fischer-Tropsch-Synthese, Methanol-Gewinnung) Verwendung finden kann. Nach der optionalen Voroxidation wird die Schmelze der eisen(oxid)haltigen Phosphor- und/oder Phosphatträger ggf. einer Kühlung und bevorzugt einer Granulierung unterzogen oder die Schmelzen werden direkt der Reduktion zugeführt. Erfindungswesentlich ist jedenfalls, dass die eisen(oxid)haltigen Phosphor und/oder Phosphatträger einer Reduktion zugeführt werden, wobei unter Zugabe von Kohlenstoffträgern zum einen P₂/P₄ und CO sowie H₂ in der Gasphase gebildet werden und zum anderen eine Eisenphosphidschmelze sowie eine Schlackenschmelze gebildet werden. Die Schlackenschmelze kann wiederum granuliert werden, wobei die dabei anfallende Wärme wiederum zur Energiegewinnung verwendet werden kann. Ebenso kann die Exergie der Schlacke in bevorzugter Weise zur Gewinnung von Holzkohle herangezogen werden, wodurch ggf. der gesamte Kohlenstoffbedarf des Schrittes der Reduktion gedeckt werden kann. Dies führt zu einer extrem günstigen CO₂-Bilanz des erfindungsgemäßen Verfahrens. Die Eisenphosphidschmelze kann in der Folge einer Oxidation gemäß Schritt b1) unterzogen werden, wobei P₂O₅ in der Gasphase gebildet werden und der Eisenanteil der Eisenphosphidschmelze aufgrund der Zugabe von Aluminiumträgern und gegebenenfalls Kalziumträgern, wenn nicht ohnehin Kalzium, beispielsweise in Form der Schlackenschmelze vorhanden ist, zu Kalk-Aluminium-Eisenverbindungen und insbesondere Brownmillerit umgesetzt werden, die in der Folge in Portlandklinker eingearbeitet werden können. Alternativ oder zusätzlich können die Schmelzen in Gegenwart von elementarem Schwefel und/oder Schwefelträgern zu Eisensulfiden und elementarem Phosphor umgesetzt werden. Alternativ oder zusätzlich können die Schmelzen in Gegenwart von Sauerstoff zu Eisenoxiden und P₂O₅ umgesetzt werden.

Wie aus Fig. 2 ersichtlich, umfasst eine erste Variante einer erfindungsgemäßen Vorrichtung 1 zur Durchführung des erfindungsgemäßen Verfahrens ein Gehäuse 2, in dem eine für die eisen(oxid)haltigen Phosphor- und/oder Phosphatträger reduktive Säule 3 aus Kohlenstoffträgern angeordnet ist. Das Gehäuse 2 weist entlang der Längsachse 4 einen Bereich 5 mit sprunghaft vergrößertem Durchmesser auf, wodurch ein Ringraum 6 zwischen dem Gehäuse 2 und der Säule 3 gebildet wird. In dem Bereich 5 wird hierdurch die Möglichkeit geschaffen, eine in Fig. 5 dargestellte Aufgabevorrichtung 7 zur Aufgabe von Schmelzen der eisen(oxid)haltigen Phosphor- und/oder Phosphatträger in den Ringraum 6 anzuordnen. Die Aufgabevorrichtung 7 wird durch eine Mehrzahl von im Bereich 5 mit sprunghaft vergrößertem Durchmesser radial angeordneten und tangential in den Ringraum gerichteten Düsen 8 für ein sauerstoffhaltiges Gas und optional Kohlestaub oder Klärschlammasche ergänzt. In dem Bereich 5 mit dem vergrößerten Durchmesser ist ein zentraler Zylinder 9 angeordnet, der im Inneren der Vorrichtung 1 feuerfest ausgekleidet ist. Die Säule 3 ist in diesem Bereich daher zu einer Ringsäule 3' erweitert. Eine Induktionsvorrichtung ist mit dem Bezugszeichen 34 bezeichnet. Am Boden 10 des Gehäuses 2 ist ein weiterer Bereich 11 mit sprunghaft vergrößertem Durchmesser angeordnet, der zum Abziehen bzw. Abstechen von Schmelze bevorzugt in einen Vorherd 12 zur Trennung der Schmelzen dient. Am Boden 10 der Säule können Düsen 13 angeordnet sein zum Durchblasen eines sauerstoffhaltigen Gases durch die Schmelze von Eisenphosphiden 14, welches bevorzugt mit einem Aluminiumträger versetzt sein kann. Auf diese Weise wird die Schmelze von Eisenphosphiden 14 mit der darüberliegenden Schlackenschmelze 15 in Kontakt gebracht, wodurch in dieser Vorrichtung auch die Oxidation zu P₂O₅ und die Bildung von Kalk-Aluminium-Eisenverbindungen, bevorzugt Brownmillerit, vorgenommen werden kann. Das P₂O₅ steigt durch die Ringsäule 3' und die Säule 3 gasförmig auf und wird dort zu P₂ umgesetzt. P₂ und CO können am Abzug 16 der Vorrichtung 1 abgezogen werden. Mit 17 ist eine Aufgabevorrichtung für Kohlenstoffträger, wie beispielsweise Koks, und Phosphatschlackengranulat bezeichnet.

In Fig. 3 sind gleiche Teile mit gleichen Bezugszeichen versehen, und es ist eine Variante einer erfindungsgemäßen Vorrichtung 1 zur Durchführung des erfindungsgemäßen Verfahrens dargestellt. Die Vorrichtung 1 ist wiederum von einem Gehäuse 2 und einer darin angeordneten, für die eisen(oxid)haltigen Phosphor- und/oder Phosphatträger reduktiven Säule 3 gebildet, wobei das Gehäuse 2 entlang seiner Längsachse 4 einen Versprung 18 aufweist, wodurch ein Hohlraum 6 zwischen dem Gehäuse 2 und der Säule 3 ausgebildet wird. Zur besseren Übersicht, ist in Fig. 3 keine Induktionsvorrichtung ersichtlich, eine solche kann jedoch analog zu Fig. 2 zum Beheizen der reduktiven Säule 3 vorgesehen sein. Mit 19 ist eine Aufgabevorrichtung für bevorzugt schmelzflüssige Edukte der Reduktion bezeichnet, welche schmelzflüssigen Edukte, d.h. die Schmelze der eisen(oxid)haltigen Phosphor- und/oder Phosphatträger, auf die Säule 3 aufgebracht werden können. Die Schmelze der Eisenphosphide 14 und die Schlackenschmelze 15 sammeln sich nach der Reduktion wiederum am Boden 10 des Gehäuses 2 bzw. der Säule 3 und können dort entweder in einen nicht dargestellten Vorherd abgezogen werden oder, wie bereits zuvor beschrieben, durch das Durchblasen eines sauerstoffhaltigen Gases durch die Schmelzen 14 und 15 aus Düsen 13 miteinander in Kontakt gebracht werden, zur Bildung von P₂O₅ und Kalk-Aluminium-Eisenverbindungen. Das P₂O₅ steigt wiederum gasförmig durch die reduktive Säule 3 auf und kann am Abzug 16 nach Umsetzung zu P₄ zusammen mit CO abgezogen werden. Verbrauchter Kohlenstoff wird wiederum über die Aufgabevorrichtung 17 ersetzt. An der Aufgabevorrichtung 17 kann auch die Zugabe von festem, ggf. granuliertem Phosphatschlackengranulat erfolgen.

In Fig. 4 ist ein Flugstromvergaser 20 zur separaten Umsetzung der Eisenphosphide gemäß den Schritten b1), b2) bzw. b3) dargestellt. Der Flugstromvergaser 20 weist einen Tundish bzw. eine Gusspfanne 21 für die Schmelzen 14 und 15 auf, wobei ein Wehrrohr 21' in den Tundish 21 abgesenkt werden kann, um einen Ringspalt 22 für den Durchtritt der Schmelzen 14 und 15 in einen Direktoxidations-Reaktor auszubilden. Die Wandung 24 der Oxidationsvorrichtung kann durch einen Luftstrom gekühlt werden, der mittels eine Ventilatorgebläses 25 betrieben wird, wobei das erhitzte und dadurch expandierte Gas in einer Turbine 26 zur Energiegewinnung entspannt werden kann. Über eine Lanze 27 wird ein sauerstoffhaltiges Gas oder ein anderes, oxidierend wirkendes Gas wie beispielsweise O₂, O₂-H₂O, Luft, CO₂ oder ein schwefelhaltiges Gas oder Schwefeldampf mit hoher kinetischer Energie eingeblasen, um die Schmelzen 14 und 15 beim Durchtritt durch den Ringspalt 22 zu zerstäuben. Mit 28 ist eine Aufgabevorrichtung für Ca und/oder Al-Träger und/oder elementaren Schwefel und/oder Schwefelträger bezeichnet. Die Reaktionsprodukte werden am Abzug 29 abgezogen und zur Trennung der Gasphase von Brownmillerit, Eisensulfiden und/oder Eisenoxiden beispielsweise einem Zyklon 30 zugeführt, der einen Abzug 31 für das gasförmige P₂O₅ und/oder elementaren Phosphor sowie eine Zellradschleuse 32 zum Austrag der Kalk-Aluminium-Eisenverbindungen aufweist.

In Fig. 5 sind wiederum gleiche Teile mit gleichen Bezugszeichen versehen und es ist erkennbar, dass im Bereich 5 mit sprunghaft vergrößertem Durchmesser, wodurch ein Ringraum 6 zwischen dem Gehäuse 2 und der Säule 3 gebildet wird, eine Aufgabevorrichtung 7 zur Aufgabe von Schmelzen der eisen(oxid)haltigen Phosphor- und/oder Phosphatträger in den Ringraum 6 angeordnet ist, wobei die Aufgabevorrichtung 7 als ringförmige Schmelzpfanne ausgebildet ist, die an ihrem Boden zumindest eine Öffnung 7' aufweist, die mit einem Dosierstößel 7" öffenbar und verschließbar ist. In der Schmelzpfanne wird die phosphat- und eisen(oxid)haltige Schlackenschmelze vorgehalten und durch eine Bewegung des Dosierstößels 7" Sinne des Doppelpfeils 33 in den Ringraum 6 und somit auf die Säule 3 geregelt aufgegeben. Im Bereich der Ringsäule 3' ist außen und innen jeweils eine Induktionsvorrichtung 34 angeordnet, um die reduktive Säule 3 bzw. 3' auf einer geeigneten Reaktionstemperatur zu halten. Am Boden 10 des Gehäuses 2 ist ein weiterer Bereich 11 mit sprunghaft vergrößertem Durchmesser angeordnet, wobei unterhalb des Bereichs 11 ein weiterer ringförmiger Tundish 33 bzw. eine ringförmige Schmelzpfanne 33 zur Aufnahme der Schmelze von Eisenphosphiden sowie der Schlackenschmelze angeordnet ist. Im Bereich 11 kann Wasserstoff eingeblasen werden. Darüber hinaus kann in den Ringraum 6 auch Kohlestaub und/oder Sauerstoff eingeblasen werden.

In Fig. 6a und 6b ist dargestellt, dass an den Bereich 11 mit dem vergrößerten Durchmesser eine Mehrzahl von jeweils entlang der Längsachse symmetrisch angeordneten, feuerfest ausgekleideten rohrförmigen Teilen 2' des Gehäuses 2 mit in den rohrförmigen Teilen 2' angeordneten, für die eisen(oxid)haltigen Phosphor- und/oder Phosphatträger reduktiven Säulen 3" aus Kohlenstoffträgern anschließt, wobei diese jeweils von Induktionsvorrichtungen 34 umgeben sind.

In Fig. 7 ist ein drehbar gelagertes Gehäuse 35 mit einer Öffnung 36 und einer Induktionsvorrichtung 37 ersichtlich. Im Bereich der Induktionsvorrichtung 37 ist eine Öffnung 35' zum Einblasen von Spülgas, beispielsweise Stickstoff, angeordnet. Im Bereich der Induktionsvorrichtung 37 wird ein Zinnbad 38 bei Temperaturen von 1500°C bis 1600°C vorgehalten, welches unterstützt durch das Spülgas die darüber liegende voroxidierte Schlackenschmelze 39 sowie ggf. die Schlackenschmelze auf einer geeigneten Reaktionstemperatur hält. In der Vorrichtung gemäß Fig. 7 können weiters die Temperatur sowie chemische Eigenschaften der voroxidierten Schlackenschmelze 39 wie oben beschrieben eingestellt werden. Ein weiterer Vorteil der Verwendung einer Vorrichtung gemäß Fig. 7 liegt darin, dass Durchflussschwankungen der vorbeschriebenen Verfahrensstufen der Voroxidation bzw. des Schritts a) durch Bereitstellen eines Auffangvolumens ausgeglichen werden können.

## Patentansprüche

1. Verfahren zum Abtrennen von Phosphor und/oder Phosphorverbindungen aus eisen(oxid)haltigen Phosphor- und/oder Phosphatträgern, wie Klärschlamm und Klärschlammasche, Tiermehl und Tiermehlasche, Gülle, Lebensmittelreste, flammhemmende Kunststoffe, Medikamente, metallurgische Schlacken, Schmierstoffreste, gebrauchte Lithium Ionen Batterien, Elektroschrott und dergleichen umfassend zumindest die folgenden Schritte:
a) schmelzmetallurgische Reduktion der eisen(oxid)haltigen Phosphor- und/oder Phosphatträger unter Bildung von Schlackenschmelze und einer Schmelze von Eisenphosphiden, insbesondere FeP, Fe₂P und/oder Fe₃P und
b1) Oxidation der Schmelze von Eisenphosphiden in Gegenwart von Ca- und Al-Trägern zur Bildung von gasförmigem P₂O₅ und Kalk-Aluminium-Eisenverbindungen, insbesondere Brownmillerit, und/oder
b2) schmelzmetallurgische Umsetzung der Schmelze von Eisenphosphiden in Gegenwart von elementarem Schwefel und/oder Schwefelträgern zur Bildung von Eisensulfiden und elementarem Phosphor.

2. Verfahren nach Anspruch 1, **dadurch gekennzeichnet, dass** das in Schritt b1) gebildete P₂O₅ dem Schritt a) zugeführt wird zur Bildung von elementarem Phosphor.

3. Verfahren nach Anspruch 1 oder 2, **dadurch gekennzeichnet, dass** bei dem Schritt a) Kohlestaub und Sauerstoff bei einem unterstöchiometrischen Verbrennungssauerstoffverhältnis, bevorzugt bei einem Verbrennungssauerstoffverhältnis von *λ*=0,2 bis *λ*=0,8, bevorzugt *λ*=0,4, zugeführt wird.

4. Verfahren nach Anspruch 1, 2 oder 3, **dadurch gekennzeichnet, dass** bei dem Schritt a) elementarer Wasserstoff zugeführt wird.

5. Verfahren einem der Ansprüche 1 bis 4, **dadurch gekennzeichnet, dass** bei dem Schritt a) die Basizität (CaO/SiO₂) der Schlackenschmelze durch Zugabe von Ca-Trägern und/oder Si-Trägern auf einen Wert von 0,75 bis 1,45, bevorzugt 0,8 bis 1,4, eingestellt wird.

6. Verfahren nach einem der Ansprüche 1 bis 5, **dadurch gekennzeichnet, dass** vor der Reduktion gemäß Schritt a) eine Voroxidation von Begleitstoffen der eisen(oxid)haltigen Phosphor- und/oder Phosphatträger erfolgt, wie z.B. Organika, Schwermetalle, Halogene, Alkalien und Schwefelverbindungen, unter Bildung einer Schmelze der eisen(oxid)haltigen Phosphor-und/oder Phosphatträgern sowie unter Abziehen der die Begleitstoffe enthaltenden Gasphase, wobei die Schmelze der eisen(oxid)haltigen Phosphor- und/oder Phosphatträger der Reduktion gemäß Schritt a) unterzogen wird.

7. Verfahren nach Anspruch 6, **dadurch gekennzeichnet, dass** die Voroxidation in einer Brennkammer unter Zuführung der eisen(oxid)haltigen Phosphor- und/oder Phosphatträger mittels eines sauerstoffhaltigen Gases erfolgt.

8. Verfahren nach Anspruch 6 oder 7, **dadurch gekennzeichnet, dass** die die Begleitstoffe enthaltende Gasphase einem Kühlschritt unterzogen wird durch In-Kontakt-Bringen der Gasphase mit organischem Abfall, wie Altkunststoff, Elektro- und Elektronikschrott, Biomasse, Gärresten und Shredder-Leichtfraktion, und/oder durch In-Kontakt-Bringen der Gasphase mit Kalkstein, Kalkmergel, Zementklinker-Rohmehl und/oder Kaolin.

9. Verfahren nach Anspruch 8, **dadurch gekennzeichnet, dass** das Abgas des Kühlschritts zur Dampferzeugung verwendet wird und feste Reststoffe von gasförmigem H₂ und/oder CO abgefiltert werden.

10. Verfahren nach Anspruch 8, **dadurch gekennzeichnet, dass** das Abgas des Kühlschritts in einer Wassergas-Shift-Reaktion zu H₂ und CO₂ umgesetzt wird und feste Reststoffe von H₂ und CO₂ abgefiltert werden.

11. Verfahren nach einem der Ansprüche 6 bis 10, **dadurch gekennzeichnet, dass** die Schmelze der eisen(oxid)haltigen Phosphor- und/oder Phosphatträger vor der Reduktion des Schritts a) gekühlt und bevorzugt granuliert wird.

12. Verfahren nach einem der Ansprüche 1 bis 11, **dadurch gekennzeichnet, dass** die Reduktion gemäß Schritt a) mittels einer für die eisen(oxid)haltigen Phosphor- und/oder Phosphatträger reduktiven Säule aus Kohlenstoffträgern, bevorzugt aus Koks, Holzkohle, Graphit und/oder Kohlestaub, bevorzugt versetzt mit Biomasse und/oder Pyrolysat organischer Verbindungen, erfolgt.

13. Verfahren nach Anspruch 12, **dadurch gekennzeichnet, dass** die reduktive Säule durch Einblasen von Sauerstoff auf Reaktionstemperatur gehalten wird.

14. Verfahren nach Anspruch 12 oder 13, **dadurch gekennzeichnet, dass** die reduktive Säule durch elektromagnetische Induktion auf Reaktionstemperatur gehalten wird.

15. Verfahren nach einem der Ansprüche 12 bis 14, **dadurch gekennzeichnet, dass** als Reaktionsprodukte der Reduktion gemäß Schritt a) P₄ sowie CO in der Gasphase und die Schmelze von Eisenphosphiden sowie die Schlackenschmelze am Boden der Säule abgezogen werden.

16. Verfahren nach einem der Ansprüche 1 bis 15, **dadurch gekennzeichnet, dass** die Schritte b1) und/oder b2) in einem Flugstromreaktor durch Zerstäubung der Schmelze von Eisenphosphiden mittels eines Gasstroms, bevorzugt bestehend aus oder enthaltend O₂, H₂O, Luft und/oder CO₂, und bevorzugt unter Zugabe von Ca- und Al-Trägern und/oder elementarem Schwefel und/oder Schwefelträgern erfolgt bzw. erfolgen.

17. Verfahren nach einem der Ansprüche 1 bis 16, **dadurch gekennzeichnet, dass** als Reaktionsprodukte der Oxidation gemäß Schritt b1) P₂O₅ in der Gasphase von Kalk-Aluminium-Eisenverbindungen, insbesondere Brownmillerit, abgetrennt werden.

18. Verfahren nach einem der Ansprüche 1 bis 16, **dadurch gekennzeichnet, dass** als Reaktionsprodukte der Umsetzung gemäß Schritt b2) Eisensulfide von elementarem Phosphor abgetrennt werden.

19. Verfahren nach Anspruch 17 oder 18, **dadurch gekennzeichnet, dass** die Abtrennung von P₂O₅ von Kalk-Aluminium-Eisenverbindungen und/oder die Abtrennung von Eisensulfiden von elementarem Phosphor mittels eines Zyklons erfolgt.

20. Verfahren nach einem der Ansprüche 12 bis 15, **dadurch gekennzeichnet, dass** die Oxidation der Schmelze von Eisenphosphiden zu P₂O₅ und die Bildung von Kalk-Aluminium-Eisenverbindungen, insbesondere Brownmillerit, in einem Bodenbereich der reduktiven Säule erfolgt, indem ein gasförmiger Sauerstoffträger, bevorzugt versetzt mit zumindest einem Aluminiumträger, durch die Schmelze von Eisenphosphiden geblasen wird und die Eisenphosphide auf diese Art mit auf der Schmelze von Eisenphosphiden schwimmender Schlackenschmelze aus Schritt a) zur Bildung von P₂O₅ und Kalk-Aluminium-Eisenverbindungen, bevorzugt Brownmillerit, in Kontakt gebracht werden.

21. Verfahren nach Anspruch 20, **dadurch gekennzeichnet, dass** P₂O₅ in der reduktiven Säule zu P₂ und CO umgesetzt und P₄ und CO in der Gasphase abgezogen werden.

22. Vorrichtung zur Durchführung eines Verfahrens nach einem der Ansprüche 1 bis 21, umfassend ein feuerfest ausgekleidetes, entlang einer Längsachse (4) symmetrisches oder rotationssymmetrisches Gehäuse (2) und eine in dem Gehäuse (2) angeordnete, bevorzugt induktiv beheizte, für die eisen(oxid)haltigen Phosphor- und/oder Phosphatträger reduktive Säule (3) aus Kohlenstoffträgern, bevorzugt aus Koks, Graphit und/oder Kohlestaub, bevorzugt versetzt mit Biomasse und/oder Pyrolysat organischer Verbindungen, wobei das Gehäuse (2) entlang der Längsachse (4) einen Bereich (11) mit sprunghaft vergrößertem Durchmesser unter Ausbildung eines Ringraums (6) zwischen dem Gehäuse (2) und der Säule (3) aufweist, **dadurch gekennzeichnet, dass** in dem Bereich (11) der sprunghaften Vergrößerung des Durchmessers zumindest eine Aufgabevorrichtung (7) für Schmelze der eisen(oxid)haltigen Phosphor- und/oder Phosphatträger in den Ringraum (6) mündet.

23. Vorrichtung nach Anspruch 22, **dadurch gekennzeichnet, dass** die zumindest eine Aufgabevorrichtung (7) mit einer Mehrzahl von im Bereich (11) mit sprunghaft vergrößertem Durchmesser radial angeordneten und tangential in den Ringraum (6) gerichteten Düsen (8) für den Eintrag eines sauerstoffhaltigen Gases und bevorzugt Kohlestaub zusammenwirkt.

24. Vorrichtung nach Anspruch 22 oder 23, **dadurch gekennzeichnet, dass** in dem Bereich (11) mit dem vergrößerten Durchmesser ein zentraler Zylinder (9) zur Ausbildung einer Ringsäule (3') in diesem Bereich angeordnet ist.

25. Vorrichtung nach Anspruch 24, **dadurch gekennzeichnet, dass** der zentrale Zylinder (9) eine Mehrzahl von Öffnungen zum Einblasen eines sauerstoffhaltigen Gases in die Ringsäule (3') aufweist.

26. Vorrichtung nach Anspruch 24 oder 25, **dadurch gekennzeichnet, dass** im zentralen Zylinder (9) eine Induktionsvorrichtung (34) angeordnet ist.

27. Vorrichtung nach einem der Ansprüche 22 bis 26, **dadurch gekennzeichnet, dass** am Boden (10) des Gehäuses (2) ein weiterer Bereich (11) mit sprunghaft vergrößertem Durchmesser unter Ausbildung eines Ringraums zwischen dem Gehäuse (2) und der Ringsäule (3') angeordnet ist, der zum Abziehen bzw. Abstechen von Schmelzen, bevorzugt in einen Vorherd (12) zur Trennung der Schmelzen, ausgebildet ist.

28. Vorrichtung nach Anspruch 27, **dadurch gekennzeichnet, dass** der weitere Bereich (11) mit sprunghaft vergrößertem Durchmesser mit Düsen zum Durchblasen eines sauerstoffhaltigen Gases, bevorzugt versetzt mit zumindest einem Aluminiumträger, durch die Schmelze von Eisenphosphiden ausgebildet ist.

29. Vorrichtung nach Anspruch 27 oder 28, **dadurch gekennzeichnet, dass** der weitere Bereich (11) mit sprunghaft vergrößertem Durchmesser mit Düsen zum Durchblasen von elementarem Wasserstoff ausgebildet ist.

30. Vorrichtung nach Anspruch 22 oder 23, **dadurch gekennzeichnet, dass** an den Bereich mit dem vergrößerten Durchmesser eine Mehrzahl von jeweils entlang einer Längsachse symmetrisch angeordneten, feuerfest ausgekleideten rohrförmigen Teilen des Gehäuses (2') mit in den rohrförmigen Teilen angeordneten, für die eisen(oxid)haltigen Phosphor- und/oder Phosphatträger reduktiven Säulen (3") aus Kohlenstoffträgern, bevorzugt aus Koks und/oder Kohlestaub, bevorzugt versetzt mit Biomasse und/oder Pyrolysat organischer Verbindungen, anschließt.

31. Vorrichtung nach Anspruch 30, **dadurch gekennzeichnet, dass** die rohrförmigen Teile des Gehäuses (2") jeweils von einer Induktionsspule (34) umfasst sind.

32. Vorrichtung zur Durchführung eines Verfahrens nach einem der Ansprüche 1 bis 21, umfassend ein feuerfest ausgekleidetes Gehäuse (2) und eine in dem Gehäuse (2) angeordnete, bevorzugte induktiv beheizte, für die eisen(oxid)haltigen Phosphor-und/oder Phosphatträger reduktive Säule (3) aus Kohlenstoffträgern, bevorzugt aus Koks und/oder Kohlestaub, bevorzugt versetzt mit Biomasse und/oder Pyrolysat organischer Verbindungen, **dadurch gekennzeichnet, dass** das Gehäuse (2) entlang seiner Längsachse (4) einen Versprung (18), bevorzugt eine Kröpfung, unter Ausbildung eines Hohlraums (6) zwischen dem Gehäuse (2) und der Säule (3) aufweist, wobei in dem Bereich des Versprungs (18) zumindest eine Aufgabevorrichtung (19) für flüssige Schmelzen der eisen(oxid)haltigen Phosphor- und/oder Phosphatträger in den Hohlraum (6) mündet.

33. Vorrichtung nach Anspruch 32, **dadurch gekennzeichnet, dass** das Gehäuse (2) eine Mehrzahl von Öffnungen zum Einblasen eines sauerstoffhaltigen Gases in die Säule (3) aufweist.

34. Vorrichtung nach Anspruch 32 oder 33, **dadurch gekennzeichnet, dass** am Boden (10) des Gehäuses (2) ein weiterer Versprung (11) des Gehäuses (2) unter Ausbildung eines Hohlraums zwischen dem Gehäuse (2) und der Säule (3) angeordnet ist, der zum Abziehen bzw. Abstechen von Schmelzen, bevorzugt in einen Vorherd (12) zur Trennung der Schmelzen, ausgebildet ist.

35. Vorrichtung nach Anspruch 34, **dadurch gekennzeichnet, dass** im Bereich des weiteren Versprungs (11) Düsen (13) zum Durchblasen eines gasförmigen Sauerstoffträgers, bevorzugt versetzt mit zumindest einem Aluminiumträger, durch die Schmelze von Eisenphosphiden angeordnet sind.

## Claims

1. Method for separating phosphorus and/or phosphorus compounds from iron(oxide)-containing phosphorus and/or phosphate carriers, such as sewage sludge and sewage sludge ash, animal meal and animal meal ash, liquid manure, food residues, flame-retardant plastics, medications, metallurgical slags, lubricant residues, used lithium-ion batteries, electronic waste and the like, comprising at least the following steps:
a) melt-metallurgical reduction of the iron(oxide)-containing phosphorus and/or phosphate carriers to form a slag melt and a melt of iron phosphides, in particular FeP, Fe₂P and/or Fe₃P and
b1) oxidation of the melt of iron phosphides in the presence of Ca and Al carriers to form gaseous P₂O₅ and lime-aluminum-iron compounds, in particular brownmillerite,
and/or
b2) melt-metallurgical conversion of the melt of iron phosphides in the presence of elemental sulfur and/or sulfur carriers to form iron sulfides and elemental phosphorus.

2. Method according to claim 1, **characterized in that** the P₂O₅ formed in step b1) is supplied to step a) to form elemental phosphorus.

3. Method according to claim 1 or 2, **characterized in that** in step a) coal dust and oxygen are supplied at a substoichiometric combustion oxygen ratio, preferably at a combustion oxygen ratio of λ=0.2 to λ=0.8, preferably A=0.4.

4. Method according to claim 1, 2 or 3, **characterized in that** in step a) elemental hydrogen is supplied.

5. Method according to any one of claims 1 to 4, **characterized in that** in step a) the basicity (CaO/SiO₂) of the slag melt is adjusted to a value of 0.75 to 1.45, preferably 0.8 to 1.4, by adding Ca carriers and/or Si carriers.

6. Method according to any one of claims 1 to 5, **characterized in that** prior to the reduction as per step a), a pre-oxidation of accompanying substances of the iron(oxide)-containing phosphorus and/or phosphate carriers takes place, such as e.g. organics, heavy metals, halogens, alkalis, and sulfur compounds, to form a melt of the iron(oxide)-containing phosphorus and/or phosphate carriers as well as withdrawing the gas phase containing the accompanying substances, wherein the melt of the iron(oxide)-containing phosphorus and/or phosphate carriers is subjected to the reduction as per step a).

7. Method according to claim 6, **characterized in that** the pre-oxidation takes place in a combustion chamber while supplying the iron(oxide)-containing phosphorus and/or phosphate carriers by means of an oxygen-containing gas.

8. Method according to claim 6 or 7, **characterized in that** the gas phase containing the accompanying substances is subjected to a cooling step by contacting the gas phase with organic waste, such as waste plastic, electrical and electronic waste, biomass, fermentation residues, and shredder light fraction, and/or by contacting the gas phase with limestone, lime marl, cement clinker raw meal, and/or kaolin.

9. Method according to claim 8, **characterized in that** the exhaust gas of the cooling step is used for steam generation and solid residues are filtered off from gaseous H₂ and/or CO.

10. Method according to claim 8, **characterized in that** the exhaust gas of the cooling step is converted into H₂ and CO₂ in a water-gas shift reaction and solid residues are filtered off from H₂ and CO₂.

11. Method according to any one of claims 6 to 10, **characterized in that** the melt of the iron(oxide)-containing phosphorus and/or phosphate carriers is cooled and preferably granulated prior to the reduction of step a).

12. Method according to any one of claims 1 to 11, **characterized in that** the reduction as per step a) takes place by means of a column of carbon carriers that is reductive for the iron(oxide)-containing phosphorus and/or phosphate carriers, preferably of coke, charcoal, graphite, and/or coal dust, preferably mixed with biomass and/or pyrolysate of organic compounds.

13. Method according to claim 12, **characterized in that** the reductive column is maintained at reaction temperature by blowing in oxygen.

14. Method according to claim 12 or 13, **characterized in that** the reductive column is maintained at reaction temperature by electromagnetic induction.

15. Method according to any one of claims 12 to 14, **characterized in that** P₄ as well as CO in the gas phase and the melt of iron phosphides as well as the slag melt are withdrawn at the bottom of the column as reaction products of the reduction as per step a).

16. Method according to any one of claims 1 to 15, **characterized in that** the steps b1) and/or b2) take place in an entrained flow reactor by atomization of the melt of iron phosphides by means of a gas stream, preferably consisting of or containing O₂, H₂O, air, and/or CO₂, and preferably with the addition of Ca and Al carriers and/or elemental sulfur and/or sulfur carriers.

17. Method according to any one of claims 1 to 16, **characterized in that**, as reaction products of the oxidation as per step b1), P₂O₅ in the gas phase is separated from lime-aluminum-iron compounds, in particular brownmillerite.

18. Method according to any one of claims 1 to 16, **characterized in that**, as reaction products of the conversion as per step b2), iron sulfides are separated from elemental phosphorus.

19. Method according to claim 17 or 18, **characterized in that** the separation of P₂O₅ from lime-aluminum-iron compounds and/or the separation of iron sulfides from elemental phosphorus takes place by means of a cyclone.

20. Method according to any one of claims 12 to 15, **characterized in that** the oxidation of the melt of iron phosphides to P₂O₅ and the formation of lime-aluminum-iron compounds, in particular brownmillerite, takes place in a bottom region of the reductive column **in that** a gaseous oxygen carrier, preferably mixed with at least one aluminum carrier, is blown through the melt of iron phosphides and the iron phosphides are in this way brought into contact with a slag melt from step a) floating on the melt of iron phosphides to form P₂O₅ and lime-aluminum-iron compounds, preferably brownmillerite.

21. Method according to claim 20, **characterized in that** P₂O₅ is converted into P₂ and CO in the reductive column and P₄ and CO are withdrawn in the gas phase.

22. Device for carrying out a method according to any one of claims 1 to 21, comprising a refractory-lined housing (2), symmetrical or rotationally symmetrical along a longitudinal axis (4), and a column (3) arranged in the housing (2), preferably inductively heated, reductive for the iron(oxide)-containing phosphorus and/or phosphate carriers, of carbon carriers, preferably from coke, graphite and/or coal dust, preferably mixed with biomass and/or pyrolysate of organic compounds, wherein the housing (2) has along the longitudinal axis (4) a region (11) with abruptly enlarged diameter with formation of an annular space (6) between the housing (2) and the column (3), **characterized in that** in the region (11) of the abrupt enlargement of the diameter at least one feeding device (7) for melt of the iron(oxide)-containing phosphorus and/or phosphate carriers opens into the annular space (6).

23. Device according to claim 22, **characterized in that** the at least one feeding device (7) cooperates with a plurality of nozzles (8) arranged radially in the region (11) with the abruptly enlarged diameter and directed tangentially into the annular space (6) for the introduction of an oxygen-containing gas and preferably coal dust.

24. Device according to claim 22 or 23, **characterized in that** a central cylinder (9) for forming an annular column (3') is arranged in the region (11) with the enlarged diameter.

25. Device according to claim 24, **characterized in that** the central cylinder (9) has a plurality of openings for blowing in an oxygen-containing gas into the annular column (3').

26. Device according to claim 24 or 25, **characterized in that** an induction device (34) is arranged in the central cylinder (9).

27. Device according to any one of claims 22 to 26, **characterized in that** at the bottom (10) of the housing (2) a further region (11) with an abruptly enlarged diameter is arranged, forming an annular space between the housing (2) and the annular column (3'), which is configured for withdrawing or tapping melts, preferably into a forehearth (12) for separating the melts.

28. Device according to claim 27, **characterized in that** the further region (11) with the abruptly enlarged diameter is configured with nozzles for blowing an oxygen-containing gas, preferably mixed with at least one aluminum carrier, through the melt of iron phosphides.

29. Device according to claim 27 or 28, **characterized in that** the further region (11) with the abruptly enlarged diameter is configured with nozzles for blowing elemental hydrogen through.

30. Device according to claim 22 or 23, **characterized in that** a plurality of refractory-lined tubular parts of the housing (2'), each arranged symmetrically along a longitudinal axis, with reductive columns (3'') of carbon carriers arranged in the tubular parts, reductive for the iron(oxide)-containing phosphorus and/ or phosphate carriers, preferably of coke and/or coal dust, preferably mixed with biomass and/or pyrolysate of organic compounds, connects to the region with the enlarged diameter.

31. Device according to claim 30, **characterized in that** the tubular parts of the housing (2'') are each surrounded by an induction coil (34).

32. Device for carrying out a method according to any one of claims 1 to 21, comprising a refractory-lined housing (2) and a column (3) arranged in the housing (2), preferably inductively heated, reductive for the iron(oxide)-containing phosphorus and/or phosphate carriers, of carbon carriers, preferably of coke and/or coal dust, preferably mixed with biomass and/or pyrolysate of organic compounds, **characterized in that** the housing (2) has an offset (18), preferably a cranked portion, along its longitudinal axis (4), forming a cavity (6) between the housing (2) and the column (3), wherein in the region of the offset (18) at least one feeding device (19) for liquid melts of the iron(oxide)-containing phosphorus and/or phosphate carriers opens into the cavity (6).

33. Device according to claim 32, **characterized in that** the housing (2) has a plurality of openings for blowing an oxygen-containing gas into the column (3).

34. Device according to claim 32 or 33, **characterized in that** at the bottom (10) of the housing (2) a further offset (11) of the housing (2) is arranged, forming a cavity between the housing (2) and the column (3), which is configured for withdrawing or tapping melts, preferably into a forehearth (12) for separating the melts.

35. Device according to claim 34, **characterized in that** in the region of the further offset (11), nozzles (13) are arranged for blowing a gaseous oxygen carrier, preferably mixed with at least one aluminum carrier, through the melt of iron phosphides.

## Revendications

1. Procédé pour séparer le phosphore et/ou des composés du phosphore à partir de supports de phosphore et/ou de phosphate contenant du fer (de l'oxyde de fer), tels que les boues d'épuration et les cendres de boues d'épuration, les farines animales et les cendres de farines animales, le lisier, les restes alimentaires, les plastiques ignifuges, les médicaments, les scories métallurgiques, les restes de lubrifiants, les batteries lithium-ion usagées, les déchets électroniques et similaires, comprenant au moins les étapes suivantes:
a) réduction métallurgique par fusion des supports de phosphore et/ou de phosphate contenant du fer (de l'oxyde de fer) avec formation d'une masse fondue de scories et d'une masse fondue de phosphures de fer, en particulier FeP, Fe₂P et/ou Fe₃P et
b1) oxydation de la masse fondue de phosphures de fer en présence de supports de Ca et de Al pour la formation de P₂O₅ gazeux et de composés de calcium-aluminium-fer, en particulier de la brownmillerite,
et/ou
b2) conversion métallurgique par fusion de la masse fondue de phosphures de fer en présence de soufre élémentaire et/ou de supports de soufre pour la formation de sulfures de fer et de phosphore élémentaire.

2. Procédé selon la revendication 1, **caractérisé en ce que** le P₂O₅ formé à l'étape b1) est amené à l'étape a) pour la formation de phosphore élémentaire.

3. Procédé selon la revendication 1 ou 2, **caractérisé en ce que**, lors de l'étape a), de la poussière de charbon et de l'oxygène sont amenés avec un rapport d'oxygène de combustion sous-stœchiométrique, de préférence avec un rapport d'oxygène de combustion de λ=0,2 à λ=0,8, de préférence λ=0,4.

4. Procédé selon la revendication 1, 2 ou 3, **caractérisé en ce que**, lors de l'étape a), de l'hydrogène élémentaire est amené.

5. Procédé selon l'une des revendications 1 à 4, **caractérisé en ce que**, lors de l'étape a), la basicité (CaO/SiO₂) de la masse fondue de scories est ajustée par l'ajout de supports de Ca et/ ou de supports de Si à une valeur de 0,75 à 1,45, de préférence de 0,8 à 1,4.

6. Procédé selon l'une des revendications 1 à 5, **caractérisé en ce qu'**avant la réduction selon l'étape a), une pré-oxydation des substances accompagnatrices des supports de phosphore et/ou de phosphate contenant du fer (de l'oxyde de fer) a lieu, comme par ex. les matières organiques, les métaux lourds, les halogènes, les alcalis et les composés soufrés, avec formation d'une masse fondue des supports de phosphore et/ou de phosphate contenant du fer (de l'oxyde de fer) ainsi qu'avec l'évacuation de la phase gazeuse contenant les substances accompagnatrices, la masse fondue des supports de phosphore et/ou de phosphate contenant du fer (de l'oxyde de fer) étant soumise à la réduction selon l'étape a).

7. Procédé selon la revendication 6, **caractérisé en ce que** la pré-oxydation s'effectue dans une chambre de combustion en amenant les supports de phosphore et/ou de phosphate contenant du fer (de l'oxyde de fer) au moyen d'un gaz contenant de l'oxygène.

8. Procédé selon la revendication 6 ou 7, **caractérisé en ce que** la phase gazeuse contenant les substances accompagnatrices est soumise à une étape de refroidissement par mise en contact de la phase gazeuse avec des déchets organiques, tels que les déchets plastiques, les déchets électriques et électroniques, la biomasse, les résidus de fermentation et la fraction légère de broyage, et/ou par mise en contact de la phase gazeuse avec du calcaire, de la marne calcaire, de la farine crue de clinker de ciment et/ou du kaolin.

9. Procédé selon la revendication 8, **caractérisé en ce que** le gaz d'échappement de l'étape de refroidissement est utilisé pour la production de vapeur et les résidus solides sont filtrés du H₂ et/ou CO gazeux.

10. Procédé selon la revendication 8, **caractérisé en ce que** le gaz d'échappement de l'étape de refroidissement est converti en H₂ et CO₂ dans une réaction de gaz à l'eau (réaction de shift) et les résidus solides sont filtrés du H₂ et du CO₂.

11. Procédé selon l'une des revendications 6 à 10, **caractérisé en ce que** la masse fondue des supports de phosphore et/ou de phosphate contenant du fer (de l'oxyde de fer) est refroidie et de préférence granulée avant la réduction de l'étape a).

12. Procédé selon l'une des revendications 1 à 11, **caractérisé en ce que** la réduction selon l'étape a) s'effectue au moyen d'une colonne réductrice pour les supports de phosphore et/ou de phosphate contenant du fer (de l'oxyde de fer), constituée de supports de carbone, de préférence de coke, de charbon de bois, de graphite et/ou de poussière de charbon, de préférence mélangés à de la biomasse et/ou au pyrolysât de composés organiques.

13. Procédé selon la revendication 12, **caractérisé en ce que** la colonne réductrice est maintenue à la température de réaction par insufflation d'oxygène.

14. Procédé selon la revendication 12 ou 13, **caractérisé en ce que** la colonne réductrice est maintenue à la température de réaction par induction électromagnétique.

15. Procédé selon l'une des revendications 12 à 14, **caractérisé en ce que**, comme produits de réaction de la réduction selon l'étape a), P₄ ainsi que CO dans la phase gazeuse et la masse fondue de phosphures de fer ainsi que la masse fondue de scories sont soutirés au fond de la colonne.

16. Procédé selon l'une des revendications 1 à 15, **caractérisé en ce que** les étapes b1) et/ou b2) s'effectuent dans un réacteur à flux entraîné par atomisation (pulvérisation) de la masse fondue de phosphures de fer au moyen d'un flux gazeux, de préférence constitué de ou contenant de l'O₂, du H₂O, de l'air et/ou du CO₂, et de préférence avec l'ajout de supports de Ca et d'Al et/ou de soufre élémentaire et/ou de supports de soufre.

17. Procédé selon l'une des revendications 1 à 16, **caractérisé en ce que**, comme produits de réaction de l'oxydation selon l'étape b1), le P₂O₅ dans la phase gazeuse est séparé des composés de calcium-aluminium-fer, en particulier de la brownmillerite.

18. Procédé selon l'une des revendications 1 à 16, **caractérisé en ce que**, comme produits de réaction de la conversion selon l'étape b2), les sulfures de fer sont séparés du phosphore élémentaire.

19. Procédé selon la revendication 17 ou 18, **caractérisé en ce que** la séparation du P₂O₅ des composés de calcium-aluminium-fer et/ou la séparation des sulfures de fer du phosphore élémentaire s'effectue au moyen d'un cyclone.

20. Procédé selon l'une des revendications 12 à 15, **caractérisé en ce que** l'oxydation de la masse fondue de phosphures de fer en P₂O₅ et la formation de composés de calcium-aluminium-fer, en particulier de la brownmillerite, s'effectue dans une zone de fond de la colonne réductrice, en soufflant un support d'oxygène gazeux, de préférence mélangé à au moins un support d'aluminium, à travers la masse fondue de phosphures de fer et en mettant de cette manière les phosphures de fer en contact avec une masse fondue de scories issue de l'étape a) flottant sur la masse fondue de phosphures de fer pour former du P₂O₃ et des composés de calcium-aluminium-fer, de préférence de la brownmillerite.

21. Procédé selon la revendication 20, **caractérisé en ce que** le P₂O₅ est converti en P₂ et CO dans la colonne réductrice et le P₄ et CO sont soutirés dans la phase gazeuse.

22. Dispositif pour la mise en oeuvre d'un procédé selon l'une des revendications 1 à 21, comprenant un boîtier (2) à revêtement réfractaire, symétrique ou à symétrie de révolution le long d'un axe longitudinal (4), et une colonne (3), disposée dans le boîtier (2) et de préférence chauffée par induction, réductrice pour les supports de phosphore et/ou de phosphate contenant du fer (de l'oxyde de fer), constituée de supports de carbone, de préférence de coke, de graphite et/ou de poussière de charbon, de préférence mélangés à de la biomasse et/ou au pyrolysât de composés organiques, le boîtier (2) présentant le long de l'axe longitudinal (4) une zone (11) avec un diamètre brusquement agrandi en formant un espace annulaire (6) entre le boîtier (2) et la colonne (3), **caractérisé en ce que**, dans la zone (11) de l'agrandissement brusque du diamètre, au moins un dispositif d'alimentation (7) pour la masse fondue des supports de phosphore et/ou de phosphate contenant du fer (de l'oxyde de fer) débouche dans l'espace annulaire (6).

23. Dispositif selon la revendication 22, **caractérisé en ce que** l'au moins un dispositif d'alimentation (7) coopère avec une pluralité de buses (8), disposées radialement dans la zone (11) au diamètre brusquement agrandi et dirigées tangentiellement dans l'espace annulaire (6), pour l'introduction d'un gaz contenant de l'oxygène et de préférence de la poussière de charbon.

24. Dispositif selon la revendication 22 ou 23, **caractérisé en ce que**, dans la zone (11) avec le diamètre agrandi, un cylindre central (9) est disposé pour former une colonne annulaire (3') dans cette zone.

25. Dispositif selon la revendication 24, **caractérisé en ce que** le cylindre central (9) présente une pluralité d'ouvertures pour insuffler un gaz contenant de l'oxygène dans la colonne annulaire (3').

26. Dispositif selon la revendication 24 ou 25, **caractérisé en ce qu'**un dispositif d'induction (34) est disposé dans le cylindre central (9).

27. Dispositif selon l'une des revendications 22 à 26, **caractérisé en ce qu'**au fond (10) du boîtier (2) est disposée une autre zone (11) avec un diamètre brusquement agrandi en formant un espace annulaire entre le boîtier (2) et la colonne annulaire (3'), qui est conçue pour le soutirage ou la coulée de masses fondues, de préférence dans un avant-creuset (12) pour la séparation des masses fondues.

28. Dispositif selon la revendication 27, **caractérisé en ce que** l'autre zone (11) au diamètre brusquement agrandi est conçue avec des buses pour souffler un gaz contenant de l'oxygène, de préférence mélangé à au moins un support d'aluminium, à travers la masse fondue de phosphures de fer.

29. Dispositif selon la revendication 27 ou 28, **caractérisé en ce que** l'autre zone (11) au diamètre brusquement agrandi est conçue avec des buses pour souffler de l'hydrogène élémentaire à travers.

30. Dispositif selon la revendication 22 ou 23, **caractérisé en ce qu'**à la zone avec le diamètre agrandi se raccorde une pluralité de parties tubulaires du boîtier (2'), disposées de manière symétrique le long d'un axe longitudinal et dotées d'un revêtement réfractaire, avec des colonnes (3'') disposées dans les parties tubulaires, réductrices pour les supports de phosphore et/ou de phosphate contenant du fer (de l'oxyde de fer), constituées de supports de carbone, de préférence de coke et/ou de poussière de charbon, de préférence mélangés à de la biomasse et/ou au pyrolysât de composés organiques.

31. Dispositif selon la revendication 30, **caractérisé en ce que** les parties tubulaires du boîtier (2'') sont chacune entourées d'une bobine d'induction (34).

32. Dispositif pour la mise en œuvre d'un procédé selon l'une des revendications 1 à 21, comprenant un boîtier (2) à revêtement réfractaire et une colonne (3), disposée dans le boîtier (2), de préférence chauffée par induction, réductrice pour les supports de phosphore et/ou de phosphate contenant du fer (de l'oxyde de fer), constituée de supports de carbone, de préférence de coke et/ou de poussière de charbon, de préférence mélangés à de la biomasse et/ou au pyrolysât de composés organiques, **caractérisé en ce que** le boîtier (2) présente le long de son axe longitudinal (4) un décrochement (18), de préférence un coude, en formant une cavité (6) entre le boîtier (2) et la colonne (3), au moins un dispositif d'alimentation (19) pour des masses fondues liquides des supports de phosphore et/ou de phosphate contenant du fer (de l'oxyde de fer) débouchant dans la cavité (6) dans la zone du décrochement (18).

33. Dispositif selon la revendication 32, **caractérisé en ce que** le boîtier (2) présente une pluralité d'ouvertures pour insuffler un gaz contenant de l'oxygène dans la colonne (3).

34. Dispositif selon la revendication 32 ou 33, **caractérisé en ce qu'**au fond (10) du boîtier (2) est disposé un autre décrochement (11) du boîtier (2) en formant une cavité entre le boîtier (2) et la colonne (3), qui est conçu pour le soutirage ou la coulée de masses fondues, de préférence dans un avant-creuset (12) pour la séparation des masses fondues.

35. Dispositif selon la revendication 34, **caractérisé en ce que**, dans la zone de l'autre décrochement (11), des buses (13) sont disposées pour souffler un support d'oxygène gazeux, de préférence mélangé à au moins un support d'aluminium, à travers la masse fondue de phosphures de fer.
